# EUROPEAN PATENT APPLICATION

(11) **EP 3 677 612 A1**
(43) Date of publication of application: **08.07.2020**
(21) Application number: 19305017.6
(22) Date of filing: 07.01.2019
(51) Int. Cl.: C08G 59/68, C08G 59/70, C08L 63/00, C08L 33/08, C08K 3/04, C08J 5/04, C08F 22/10, C08F 2/44, C08F 2/48, C08F 4/40

(54) **HIGH PERFORMANCE PHOTOINITIATING SYSTEMS FOR POLYMER/OPAQUE FILLER COMPOSITES**

(71) Applicant: Université de Haute Alsace, 68200 Mulhouse (FR); CENTRE NATIONAL DE LA RECHERCHE SCIENTIFIQUE, 75016 Paris (FR)
(72) Inventor: LALEVÉE, Jacques, 68200 MULHOUSE (FR); MOKBEL, Haifaa, 68100 MULHOUSE (FR)
(74) Representative: Novagraaf Technologies

(57) **Abstract**

The present invention relates to a process for preparing polymer/opaque filler composite materials using a three-component copper complex/iodonium salt/amine as photoinitiating system, and uses of a copper complex and/or tri-association copper complex/iodonium salt/amine for effecting visible to middle-to-near UV free radical photopolymerization and/or cationic photopolymerization of a composition comprising a light-occulting amount of opaque fillers. The present invention also relates to uses of a copper complex and/or tri-association copper complex/iodonium salt/amine for preparing polymer/opaque filler composite materials wherein the polymer is an interpenetrated network. The present invention also relates to uses of a copper complex and/or tri-association copper complex/iodonium salt/amine for dark curing polymerizable compositions containing light-occulting amounts of opaque fillers, under visible to middle-to-near UV irradiation.

## Description

### FIELD OF THE INVENTION

The present invention relates to a process for preparing polymer/opaque filler composite materials using a three-component copper complex/iodonium salt/amine as photoinitiating system, and uses of a copper complex and/or tri-association copper complex/iodonium salt/amine for effecting visible to middle-to-near UV free radical photopolymerization and/or cationic photopolymerization of a composition comprising a Light-occulting amount of opaque fillers. The present invention also relates to uses of a copper complex and/or tri-association copper complex/iodonium salt/amine for preparing polymer/opaque filler composite materials wherein the polymer is an interpenetrated network. The present invention also relates to uses of a copper complex and/or tri-association copper complex/iodonium salt/amine for dark curing polymerizable compositions containing light-occulting amounts of opaque fillers, under visible to middle-to-near UV irradiation.

In the present document, the numbers between brackets (**[ ]**) refer to the List of References provided at the end of the document.

### BACKGROUND OF THE INVENTION

Composite materials are being developed today in almost all fields and are at the origin of formidable challenges in various high-tech achievements, particularly for structure weight reduction. Two types of fibers are currently used in the composites industry: glass fibers and carbon fibers. Glass fibers are known as poor thermal conductors, but they have a high degree of transparency. This makes them compatible with photopolymerization techniques. On the other hand, carbon fibers are good thermal conductors, but their color (black) prevents light from penetrating deep inside samples containing carbon fiber fillers. Carbon fiber mechanical properties are also better.

Although glass fiber composites represent the largest market today, their application may be limited compared to carbon fiber composites. Indeed, the latter offer lighter and more resistant materials and should have important applications in the transport market (e. g. automotive, aeronautics, etc.). However, producing carbon fiber-based composite materials is a major industrial challenge, particularly because the presence of opaque fillers hampers/prevents photopolymerization from taking place.

Photopolymerization, including cationic photopolymerization, offers many advantages compared to conventional thermal polymerization, such as the spatial control of the initiation, and the fact that polymerization can be carried out without solvent and therefore to reduced cost. Another important advantage is that it can be performed at room temperature, unlike thermal polymerization which often requires a high temperature, thereby allowing gains in terms of economic and energy cost savings. As to cationic polymerization, it is generally not oxygen-sensitive, which is a major advantage because it does not require the use of an inert atmosphere. Thus, cationic photopolymerization is a powerful technique as it combines all the aforementioned advantages.

Therefore, there remains a need for the development of new methods and systems for producing polymer/opaque filler composite materials via photopolymerization.

### BRIEF DESCRIPTION OF THE DRAWINGS

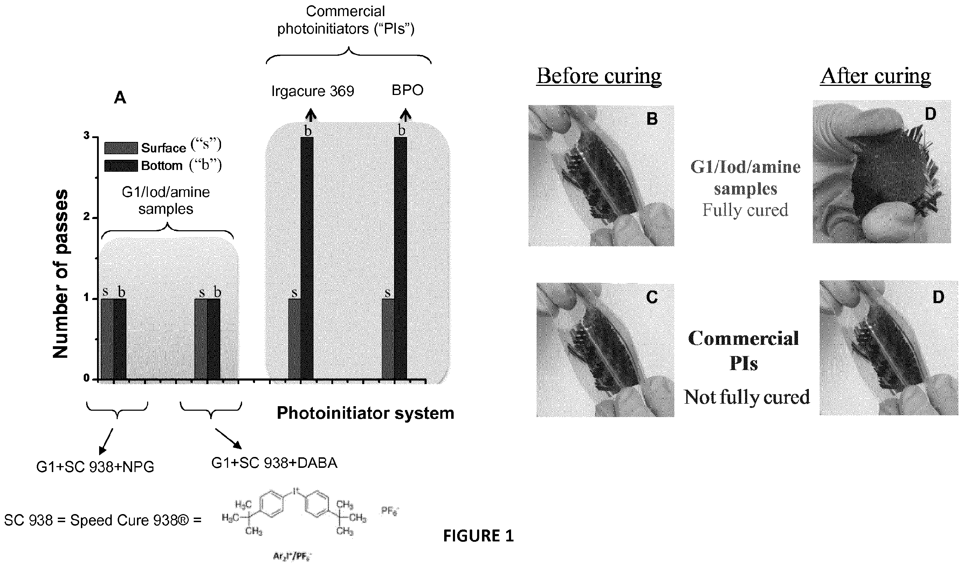

**Figure 1**. Comparative performance of a photoinitiating system according to the invention (G1/lod/amine (G1 : 0.2 wt%, amine : 1 wt%)) with commercial photoinitiators for free radical photopolymerization of TMPTA and dual cationic/free radical polymerization of Model cationic resin/TMPTA (70/30 w/w %). UV conveyor belt speed = 2m/min, λ= 200-450 nm, one carbon fiber layer (Example 1).

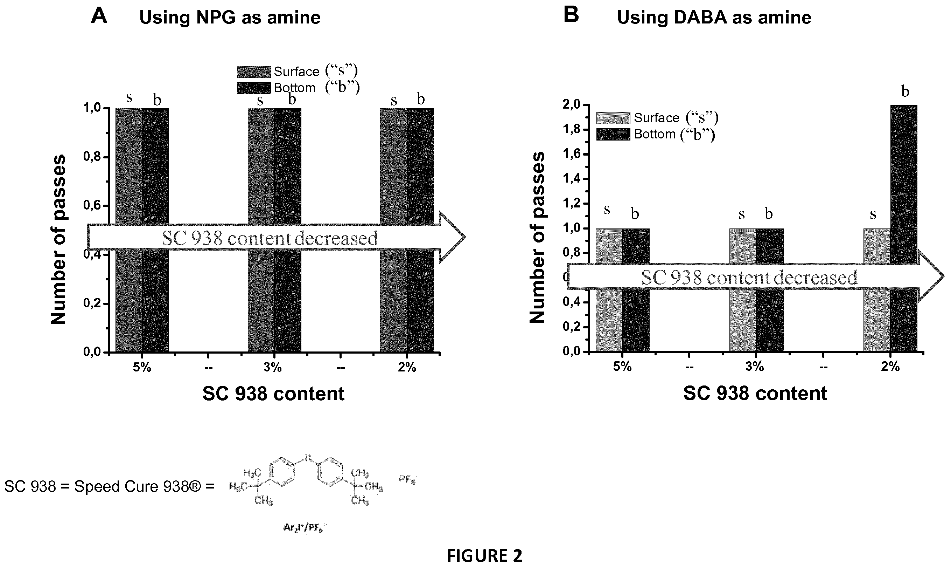

**Figure 2****.** Performance of a photoinitiating system according to the invention (G1/lod/amine (G1: 0.2 wt%, amine : 1 wt%)) with different iodonium salt amounts for free radical photopolymerization of TMPTA. UV conveyor belt speed = 2m/min, λ= 200-450 nm, one carbon fiber layer (Example 2).

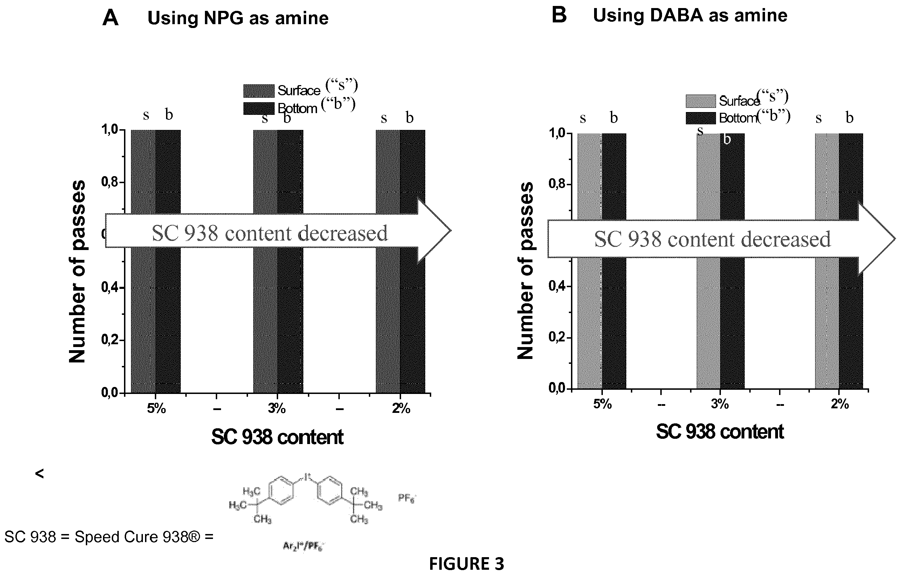

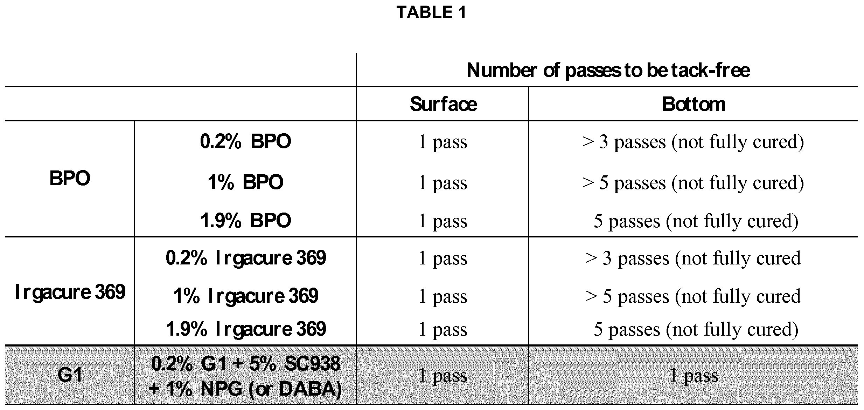

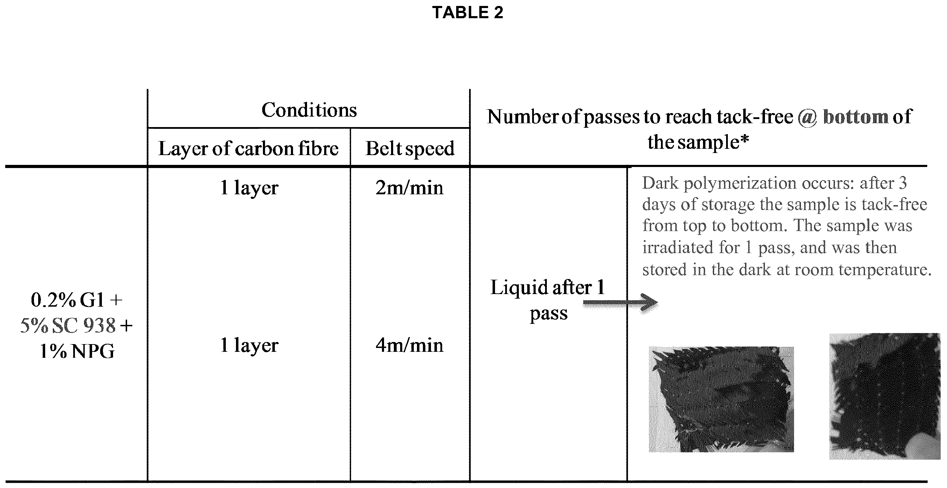

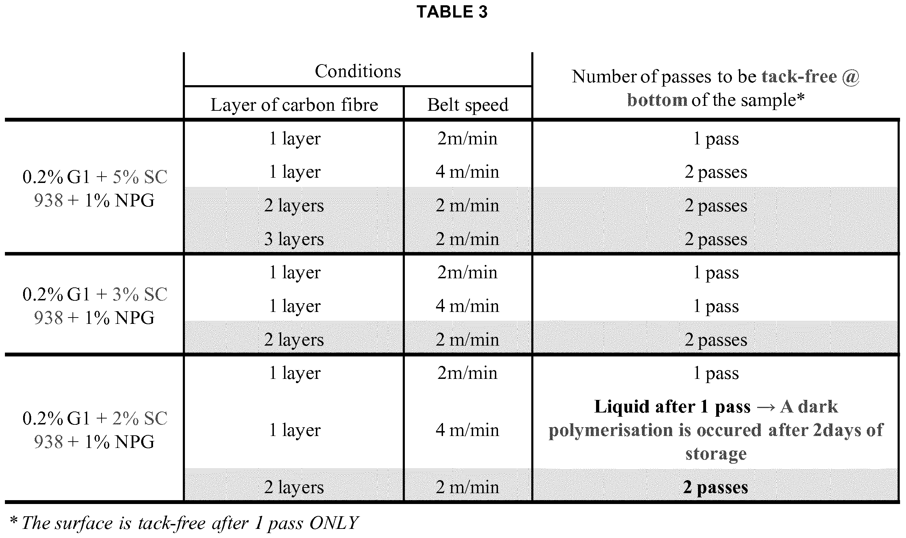

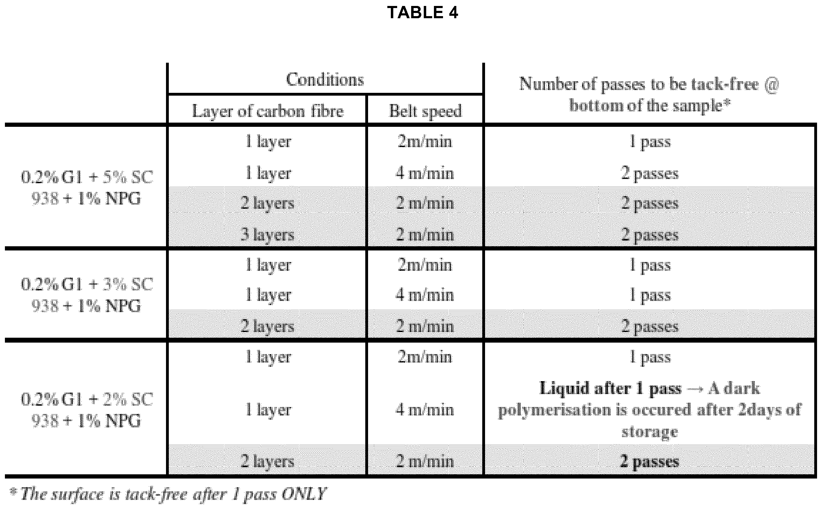

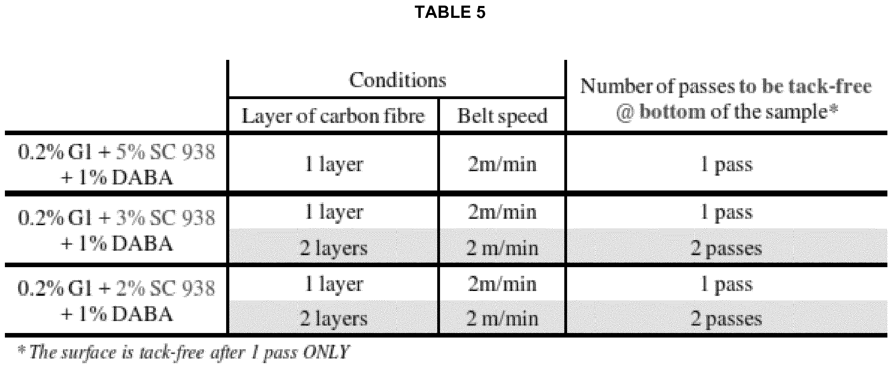

**Figure 3****.** Performance of a photoinitiating system according to the invention (G1/lod/amine (G1: 0.2 wt%, amine : 1 wt%)) with different iodonium salt amounts for dual cationic/free radical polymerization of Model cationic resin/TMPTA (70/30 w/w %). UV conveyor belt speed = 2m/min, λ= 200-450 nm, one carbon fiber layer (Example 2).

### DEFINITIONS

To facilitate an understanding of the present invention, a number of terms and phrases are defined below:
As used herein other than the claims, the terms "a," "an," "the," and/or "said" means one or more. As used herein in the claims, when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise." As used herein and in the claims "another" may mean at least a second or more.

The phrase "a mixture thereof" and such like following a listing, the use of "and/or" as part of a listing, a listing in a table, the use of "etc." as part of a listing, the phrase "such as," and/or a listing within brackets with "e.g.," or i.e., refers to any combination (e.g., any sub-set) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."

In general, the term "substituted" whether preceded by the term "optionally" or not, means that one or more hydrogens of the designated moiety are replaced with a suitable substituent. Unless otherwise indicated, an "optionally substituted" group may have a suitable substituent at each substitutable position of the group, and when more than one position in any given structure may be substituted with more than one substituent selected from a specified group, the substituent may be either the same or different at every position. As used herein, the term "substituted" is contemplated to include all permissible substituents of organic compounds.

Suitable monovalent substituents on a substitutable carbon atom of an "optionally substituted" group include independently halogen; C1-6alkyl, C2-6alkenyl, C2-6alkynyl, -O-C1-6alkyl, -O-C2-6alkenyl, -O-C2-6alkynyl, C6-10aryl, -O-C6-10aryl, heteroaryl or-O-heteroaryl having 1-4 heteroatoms independently selected from nitrogen, oxygen, or sulfur, heterocyclyl, alicyclyl, -NO₂; -CN for example, wherein each of the foregoing alkyl, alkenyl and alkynyl groups may be independently interrupted by one or more oxygen atoms.

Suitable divalent substituents on a saturated carbon atom of an "optionally substituted" group include =O, =S, for example.

Suitable substituents on a substitutable nitrogen of an "optionally substituted" group include C1-6alkyl, C2-6alkenyl, C2-6alkynyl, C6-10aryl, aryl ring having 0-4 heteroatoms independently selected from nitrogen, oxygen, or sulfur, heterocyclyl, alicyclyl, for example.

The term "aliphatic", as used herein, includes both saturated and unsaturated, straight chain (i.e., unbranched) or branched aliphatic hydrocarbons, which are optionally substituted with one or more functional groups. As will be appreciated by one of ordinary skill in the art, "aliphatic" is intended herein to include, but is not limited to, alkyl, alkenyl, alkynyl moieties, as defined below.

As used herein, the term "alkyl", refers to straight and branched C1-C10alkyl groups. An analogous convention applies to other generic terms such as "alkenyl", "alkynyl" and the like. As used herein, "lower alkyl" is used to indicate those alkyl groups (substituted, unsubstituted, branched or unbranched) having about 1-6 carbon atoms. Illustrative alkyl groups include, but are not limited to, for example, methyl, ethyl, n-propyl, isopropyl, allyl, n-butyl, sec-butyl, isobutyl, tert-butyl, n-pentyl, sec-pentyl, isopentyl, tert-pentyl, n-hexyl, sec-hexyl, moieties and the like, which again, may bear one or more substituents. Alkenyl groups include, but are not limited to, for example, ethenyl, propenyl, butenyl, 1-methyl-2-buten-l-yl, and the like. Representative alkynyl groups include, but are not limited to, ethynyl, 2-propynyl (propargyl), 1-propynyl and the like.

The term "alicyclic" or "cycloaliphatic", as used herein, refers to compounds which combine the properties of aliphatic and cyclic compounds and include but are not limited to cyclic, or polycyclic aliphatic hydrocarbons and bridged cycloalkyl compounds, which are optionally substituted with one or more functional groups. As will be appreciated by one of ordinary skill in the art, "alicyclic" is intended herein to include, but is not limited to, cycloalkyl, cycloalkenyl, and cycloalkynyl moieties, which are optionally substituted with one or more functional groups. Illustrative alicyclic groups thus include, but are not limited to, for example, cyclopropyl, -CH₂-cyclopropyl, cyclobutyl, -CH₂-cyclobutyl, cyclopentyl, -CH₂-cyclopentyl-n, cyclohexyl, -CH₂-cyclohexyl, cyclohexenylethyl, cyclohexanylethyl, norborbyl moieties and the like, which again, may bear one or more substituents.

The term "heteroaliphatic", as used herein, refers to aliphatic moieties in which one or more carbon atoms in the main chain have been substituted with a heteroatom. Thus, a heteroaliphatic group refers to an aliphatic chain which contains one or more oxygen, sulfur, nitrogen, phosphorus or silicon atoms, i.e., in place of carbon atoms. Heteroaliphatic moieties may be branched or linear unbranched. An analogous convention applies to other generic terms such as "heteroalkyl", "heteroalkenyl", "heteroalkynyl" and the like.

The term "heterocyclic" or "heterocycle", as used herein, refers to compounds which combine the properties of heteroaliphatic and cyclic compounds and include but are not limited to saturated and unsaturated mono- or polycyclic heterocycles such as morpholino, pyrrolidinyl, furanyl, thiofuranyl, pyrrolyl etc., which are optionally substituted with one or more functional groups, as defined herein. In certain embodiments, the term "heterocyclic" refers to a non-aromatic 5-, 6- or 7- membered ring or a polycyclic group, including, but not limited to a bi- or tri-cyclic group comprising fused six-membered rings having between one and three heteroatoms independently selected from oxygen, sulfur and nitrogen, wherein (i) each 5-membered ring has 0 to 2 double bonds and each 6-membered ring has 0 to 2 double bonds, (ii) the nitrogen and sulfur heteroatoms may optionally be oxidized, (iii) the nitrogen heteroatom may optionally be quaternized, and (iv) any of the above heterocyclic rings may be fused to an aryl or heteroaryl ring. Representative heterocycles include, but are not limited to, pyrrolidinyl, pyrazolinyl, pyrazolidinyl, imidazolinyl, imidazolidinyl, piperidinyl, piperazinyl, oxazolidinyl, isoxazolidinyl, morpholinyl, thiazolidinyl, isothiazolidinyl, and tetrahydrofuryl.

In general, the term "aromatic" or "aryl", as used herein, refers to stable substituted or unsubstituted unsaturated mono- or polycyclic hydrocarbon moieties having preferably 3-14 carbon atoms, comprising at least one ring satisfying Hückle's rule for aromaticity. Examples of aromatic moieties include, but are not limited to, phenyl, indanyl, indenyl, naphthyl, phenanthryl and anthracyl.

As used herein, the term "heteroaromatic" or "heteroaryl" refers to unsaturated mono-heterocyclic or polyheterocyclic moieties having preferably 3-14 carbon atoms and at least one ring atom selected from S, O and N, comprising at least one ring satisfying the Hückel rule for aromaticity. Preferably, the heteroaromatic compound or heteroaryl may be a cyclic unsaturated radical having from about five to about ten ring atoms of which one ring atom is selected from S, O and N; zero, one or two ring atoms are additional heteroatoms independently selected from S, O and N; and the remaining ring atoms are carbon, the radical being joined to the rest of the molecule via any of the ring atoms, such as, for example, pyridyl, pyrazinyl, pyrimidinyl, pyrrolyl, pyrazolyl, imidazolyl, thiazolyl, oxazolyl, isooxazolyl, thiadiazolyl, oxadiazolyl, thiophenyl, furany1, quinolinyl, isoquinolinyl, and the like.Examples of heteroaryl moieties include, but are not limited to, pyridyl, quinolinyl, dihydroquinolinyl, isoquinolinyl, quinazolinyl, dihydroquinazolyl, and tetrahydroquinazolyl.

As used herein, the term "aromatic amine" refers to a compound having the structure R1-N(R)₂ wherein R1 represents an aryl group and each occurrence of R is independently hydrogen, or an optionally substituted aliphatic, heteroaliphatic, aryl or heteroaryl moiety, or the R groups, taken together with the nitrogen atom to which they are attached, may form a heterocyclic moiety.

As used herein, the term "independently" refers to the fact that the substituents, atoms or moieties to which these terms refer, are selected from the list of variables independently from each other (i.e., they may be identical or the same).

As used herein, the term "opaque filler" refers to a filler, as conventionally understood in the field of polymer/composites, that does not allow light to pass through (does not transmit incident light). This includes black-colored fillers that completely absorb all incident rays, and neither reflect nor transmit any.

As used herein, the term "light-occulting amount" when used to qualify opaque fillers present in admixture with the polymerizable monomer(s) used according to the present invention, refers to an amount of opaque fillers, as further described herein, that is sufficiently high to prevent penetration of light irradiation beyond the surface of the sample to be polymerized (sample comprising the opaque fillers and the polymerizable monomer(s)). As such, the presence of the opaque filler in admixture with the polymerizable monomer(s) hampers or prevents photopolymerization from taking place (the monomers do not photopolymerize beyond the surface of the sample that is exposed to the light source irradiation, such as visible to middle-to-near UV irradiation). As used herein, "about" refers to any inherent measurement error or a rounding of digits for a value (e.g., a measured value, calculated value such as a ratio), and thus the term "about" may be used with any value and/or range. As used herein, the term "about" can refer to a variation of ±5% of the value specified. For example, "about 50" percent can in some embodiments carry a variation from 45 to 55 percent. For integer ranges, the term "about" can include one or two integers greater than and/or less than a recited integer. Unless indicated otherwise herein, the term "about" is intended to include values, e.g., weight %, temperatures, proximate to the recited range that are equivalent in terms of the functionality of the relevant individual ingredient, the composition, or the embodiment.

As used herein, the term "and/or" means any one of the items, any combination of the items, or all of the items with which this term is associated.

As will be understood by the skilled artisan, all numbers, including those expressing quantities of ingredients, properties such as molecular weight, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.

As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range (e.g., weight percents or carbon groups) includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.

As will also be understood by one skilled in the art, all language such as "up to," "at least," "greater than," "less than," "more than," "or more," and the like, include the number recited and such terms refer to ranges that can be subsequently broken down into subranges as discussed above. In the same manner, all ratios recited herein also include all subratios falling within the broader ratio. Accordingly, specific values recited for radicals, substituents, and ranges, are for illustration only; they do not exclude other defined values or other values within defined ranges for radicals and substituents.

One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.

### DETAILED DESCRIPTION OF CERTAIN PREFERRED EMBODIMENTS OF THE INVENTION

As noted above, composite materials are attracting increasing interest from many industrial sectors, and their use is becoming more widespread. Specifically, access to opaque filler-based composite materials, such as carbon fiber-based composites, has remained a major challenge because light penetration is considered low (opaque material). Accordingly, there has been increasing interest in recent years in the development of methods and systems for producing polymer/opaque filler composite materials via photopolymerization.

In this context, for the first time - to our knowledge - a new process for the production of opaque filler-based composite materials by photopolymerization using relatively mild (low intensity) irradiation conditions is presented.

As such, in one aspect, the present invention relates to a process for preparing polymer/opaque filler composite materials comprising a step of exposing to near UV and visible irradiation a composition comprising:
(a) at least one polymerizable component selected from:
   (i) an ethylenically unsaturated monomer, the polymerization of which may be effected by free radical polymerization;
   (ii) an ethylenically unsaturated monomer, a cyclic ether-containing monomer or a polyol monomer; the polymerization of which may be effected by cationic polymerization;
   (iii) or a mixture of at least one monomer (i) and at least one monomer (ii); and
(b) a light-occulting amount of opaque fillers;
in the presence of a photoinitiating system comprising:
(c) a copper complex of formula I or II: 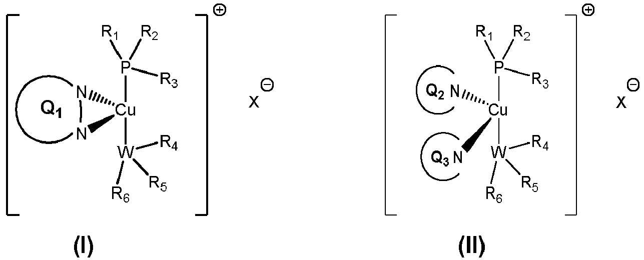 wherein
   Q₁ represents a conjugated polyaromatic system containing two nitrogen atoms whose lone pair of electrons forms a bond with the copper atom;
   Q₂ and Q₃ independently represent an aromatic system, preferably a conjugated polyaromatic system, containing one nitrogen atom whose lone pair of electrons forms a bond with the copper atom;
   W represents a phosphorus or nitrogen atom;
   R₁, R₂, R₃, R₄, R₅ and R₆ each independently represents a C₄₋₂₀ alkyl (preferably C₆₋₂₀ alkyl) or C₆₋₁₀ aryl moiety; wherein the foregoing alkyl and/or aryl moieties may be independently further substituted with one or more linear or branched C₁₋₆alkyl, C₆₋₁₀ aryl moieties or phosphorus-containing moiety, optionally bearing a C1-linker and/or a heteroatom such as O or S connecting R³ and R⁴; and wherein R₃ and R₄, together with the P, Cu and W atoms, may form a 6- to 8-membered ring; and
   X represents a suitable counterion; preferably BF₄⁻, PF₆, SbF₆⁻ or Cl⁻;
(d) at least one iodonium salt; and
(e) at least one aromatic amine.

Optionally, R₃ and R₄ may be absent and the P and W atoms may both be covalently bound to the aromatic system Q₂ or Q₃.

As the reader will understand, depending on the type of monomer(s) used (i.e., whether the monomer polymerizes according to a free radical mechanism, or a cationic mechanism), the process may involve:
- free radical photopolymerization
- cationic photopolymerization; or
- both free radical and cationic polymerization.

### A) Polymerizable component

The polymerizable component may be:
(i) At least one of any monomer whose polymerization may be effected by free radical polymerization ;
(ii) At least one of any monomer whose polymerization may be effected by cationic polymerization;
(iii) a mixture of at least one monomer defined in (i) above and at least one monomer defined in (ii) above.

Advantageously, the polymerizable component may be at least one ethylenically unsaturated monomer, the polymerization of which may be effected by free radical polymerization. As used herein, the term "ethylenically unsaturated monomer" refers to a monomer that contains at least one carbon-carbon double bond. Preferably, ethylenically unsaturated monomers whose polymerization may be effected by free radical polymerization, contains at least one carbon-carbon double bond that is conjugated with an aryl moiety (e.g., phenyl), a carboxyl (C=O) group, or another double bond. Such monomers in this category include for example acrylates-[(ROCO)CHCH₂]- (acrylic acid, methyl acrylate, ethyl acrylate, butyl acrylate, etc...), methacrylates -[(ROCO)C(Me)CH₂]- (methacrylic acid, methyl methacrylic acid, etc...), styrene, ethylene, propylene, N-vinyl acrylamide, N-vinylpyrolidone. For example, the polymerizable component may be an ethylenically unsaturated monomer comprising at least two acrylate or methacrylate groups. For example, any one or more of the following monomer(s) may be used:

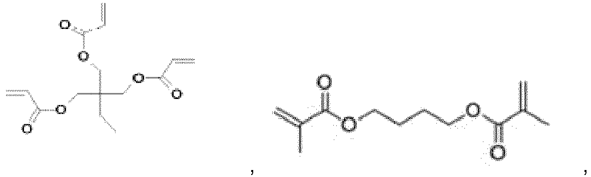

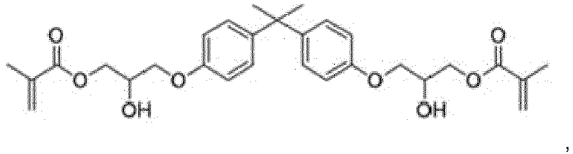

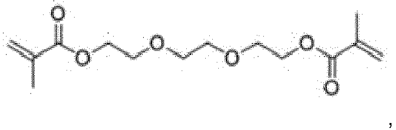

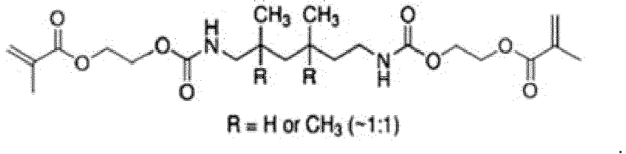

Advantageously, the polymerizable component may be an ethylenically unsaturated monomer, a cyclic ether-containing monomer or a polyol monomer, whose polymerization may be effected by cationic polymerization. Examples of these monomers include:
a) vinyl ethers (RO-CH=CH₂) such as vinyl methyl ether, vinyl ethyl ether, vinyl isobutyl ether;
   Vinyl ether-containing monomers useable in the context of the present invention may be any known Vinyl ether-containing monomers, including commercially available vinyl ether monomers such as: Bis[4-(vinyloxy)butyl] 1,6-hexanediylbiscarbamate, Bis[4-(vinyloxy)butyl] isophthalate, Bis[4-(vinyloxy)butyl] (methylenedi-4,1-phenylene)biscarbamate, Bis[4-(vinyloxy)butyl] succinate, Bis[4-(vinyloxy)butyl]terephthalate, Bis[4-(vinyloxymethyl)cyclohexylmethyl] glutarate, 1,4-Butanediol divinyl ether , 1,4-Butanediol vinyl ether, Butyl vinyl ether, *tert*-Butyl vinyl ether, 2-Chloroethyl vinyl ether, cis-1,4-Cyclohexanedimethanol divinyl ether, trans-1,4-Cyclohexanedimethanol divinyl ether, Cyclohexyl vinyl ether, Di(ethylene glycol) divinyl ether, Di(ethylene glycol) vinyl ether, Diethyl vinyl orthoformate, Dodecyl vinyl ether, Ethylene glycol vinyl ether, 2-Ethylhexyl vinyl ether, 2-Ethylhexyl vinyl ether, Ethyl-1-propenyl ether (cis, trans, or mixture thereof), Ethyl vinyl ether, Isobutyl vinyl ether, Phenyl vinyl ether, Propyl vinyl ether Tris[4-(vinyloxy)butyl]trimellitate.
b) cyclic ether-containing monomers comprising at least one 3- to 6-membered cyclic ether functional group, preferably at least one 3- or 4-membered cyclic ether functional group, more preferably at least one epoxy or oxetane group. Advantageously, the cyclic ether-containing monomer comprises at least two 3- to 6-membered cyclic ether functional groups, preferably at least two 3- or 4-membered cyclic ether functional groups, more preferably at least two epoxy or oxetane groups. Advantageously, the cyclic ether-containing monomer may be any suitable compound containing at least one, preferably at least two, cyclic ether moiety/ies. Advantageously, epoxy-containing and/or oxetane-containing monomers may be used. The cyclic ether-containing monomer can be used alone or in admixture, and advantageously has a number of cyclic ether functions greater than or equal to one, preferably one to four, most preferably one to three. In exemplary embodiments, the cyclic ether-containing monomer may advantageously have a number of cyclic ether functions greater than or equal to two, preferably two to four, most preferably two to three. One can refer to the various publications in the literature that describe the chemistry, structure, reactivity of epoxide monomers, such as notably: "Handbook of Epoxy Resins," Lee & Neville, Mc Graw-Hill (1982), "Chemistry and technology of the epoxy Resins," B. Ellis, Chapman Hall (1993), New York and "Epoxy Resins Chemistry and technology," C. A. May, Marcel Dekker, New York (1988). **[1]** Advantageously, the cyclic ether-containing monomer may contain 1, 2, 3 or 4, preferably 1, 2 or 3, more preferably 2 or 3, cyclic ether moieties such as epoxy or oxetane moieties. Aromatic, cycloaliphatic, heterocyclic or aliphatic mono- or poly-functional cyclic ether components can be used indiscriminately in the context of the invention. The cyclic ether-containing monomer can carry substituents such as aliphatic, cycloaliphatic, aromatic or heterocyclic chains, or other elements such as fluorine and bromine for example. Generally, the substituents present on the cyclic ether-containing monomer are not of a nature to interfere with the cationic photopolymerization reaction of the cyclic ether functions.

As used herein, the term "epoxy-containing monomer" refers to a monomer bearing a moiety comprising an epoxy ring having the structure: 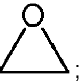 for example 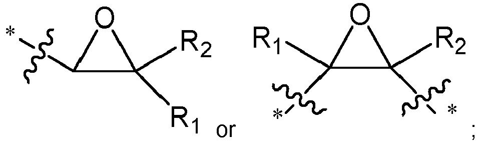 wherein "*" denotes the point(s) of attachment of the oxirane moiety to the rest of the monomer; and R₁ and R₂ independently represent H or a linear or branched C₁₋₁₀ alkyl or C₆₋₁₀ aryl moiety; wherein each of the foregoing aryl moieties may be, individually, further substituted with one or more linear or branched C₁₋₆ alkyl or C₆₋₁₀ aryl moieties. For example, the polymerizable component may be any one of the following epoxide-containing monomers:

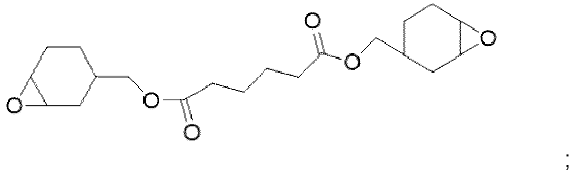

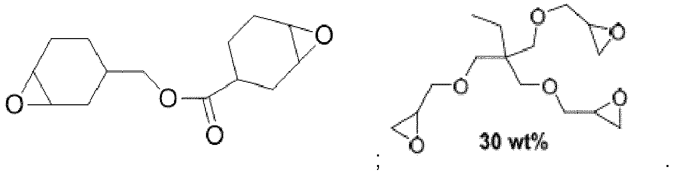

Likewise, as used herein, the term "oxetane-containing monomer" refers to a monomer bearing a moiety comprising an oxetane ring having the structure: 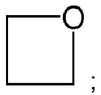 for example 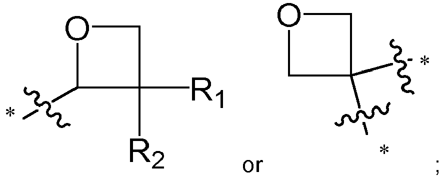 wherein "*" denotes the point(s) of attachment of the oxetane moiety to the rest of the monomer; and R₁ and R₂ independently represent H or a linear or branched C₁₋₁₀ alkyl or C₆₋₁₀ aryl moiety; wherein each of the foregoing aryl moieties may be, individually, further substituted with one or more linear or branched C₁₋₆ alkyl or C₆₋₁₀ aryl moieties. For example, at least one polymerizable component may be one of the following oxetane-containing monomers:

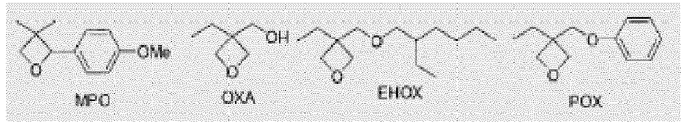

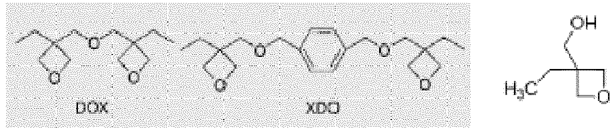

Preferably, the cyclic ether-containing monomer may be a polyfunctional heteroaliphatic epoxy or oxetane compound such as:

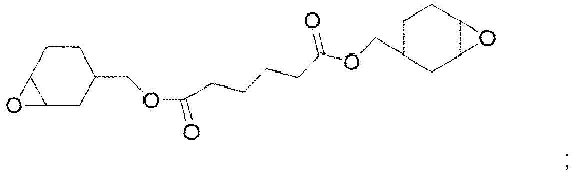

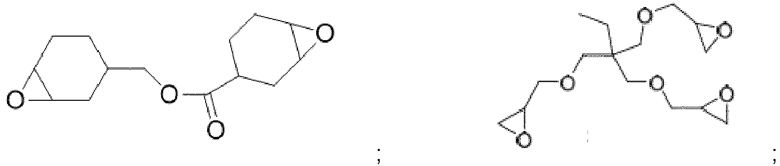

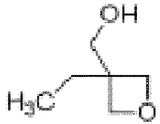

The cyclic ether-containing monomer may be a polyfunctional aromatic epoxy compound such as:

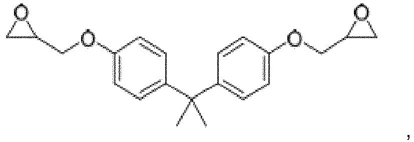

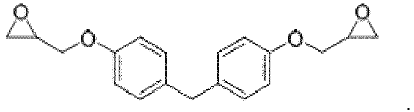

Epoxy prepolymers may also be used as cyclic ether components, in particular those epoxy prepolymers obtained from reaction of diols with epichlorhydrine, such as bisphenol A diglycidyl ether, 1,4-butanediol diglycidyl ether. Epoxy prepolymers obtained from reaction of diamines with epichlorhydrine may also be used, for example 4,4'-diaminodiphenyl methane tetraglycidyl ether.

As mentioned previously, the cyclic ether-containing monomer may be used alone, or in admixture. As such, a mixture of two or more of the above-mentioned cyclic ether-containing monomers, for example a mixture of two or more epoxy-containing components, may be used.

The ethylenically unsaturated monomer whose polymerization may be effected by cationic polymerization may be a vinyl ether.

The cyclic ether-containing monomer whose polymerization may be effected by cationic polymerization may comprise at least one 3- to 6-membered cyclic ether functional group, preferably at least one 3- or 4-membered cyclic ether functional group, more preferably at least one epoxy or oxetane group.
c) dendritic polyol monomers, preferably fatty acid modified dendritic polyol monomers such as Boltorn H2004:

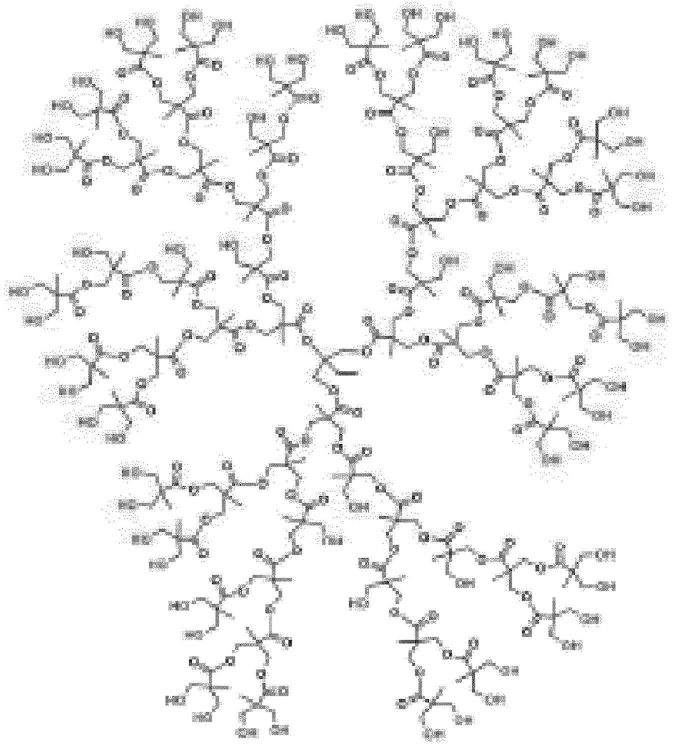

Advantageously, the polymerizable component may be a mixture of two or more components which are polymerizable via different polymerization mechanisms: free radical polymerization or cationic polymerization, respectively. For example, the polymerizable component may comprise (i) an ethylenically unsaturated monomer polymerizable by free radical polymerization and (ii) an ethylenically unsaturated monomer, a cyclic ether-containing monomer or a polyol monomer; the polymerization of which may be effected by cationic polymerization. For example, the polymerizable component may be a mixture of TMPTA and EPOX. Other examples include mixtures vinylether/acrylate and vinylether/epoxy.

### B) Opaque fillers

The opaque fillers useable in the context of the present invention may be any opaque filler known in the art or conventionally used in polymer composites. These include, but are not limited to, aramid fibers, basalt fibers, silica fibers (crystalline or non crystalline), metallic fillers (for example metallic nanoparticles), polymer fibers (such as polyesters, poly (p-phenylene-2,6 -benzobisoxazole), aliphatic and aromatic polyamides, polyethylene, polymethyl methacrylate, polytetrafluoroethylene), natural fibers (such as nettle, flax or hemp fibers) or carbon-based fillers such as carbon black, biochar, carbon fibers, carbon fiber fabrics or carbon nanostructures (such as carbon nanotubes or graphene), or a mixture of two or more of those. Preferably, carbon-based fillers may be used, such as carbon black, biochar, carbon fibers, carbon fiber fabrics or carbon nanostructures (such as carbon nanotubes or graphene). Advantageously, carbon black, carbon fibers or carbon nanotubes may be used. Advantageously, carbon fibers may be used as opaque fillers, for example in the form of carbon fiber fabrics.

Advantageously, the process may comprise a step of mixing or impregnating the opaque fillers with a composition comprising the at least one polymerizable component a), the copper complex c), the iodonium salt d) and the aromatic amine e) prior to visible to middle-to-near UV irradiation. The opaque fillers may be any suitable opaque reinforcements/fillers known in the art, and will be selected depending of the intended composite, and desired composite properties.

Advantageously, the process according to the invention may further comprise a step of impregnating the opaque fillers with a composition comprising the at least one polymerizable component a), the copper complex c), the iodonium salt d) and the aromatic amine e), in a mold, such as a silicone mold, prior to the application of light source. Then the resulting mixture may be deposited / spread evenly over the mold, either manually or using an automated robot, in the case of mass production. Alternatively, the opaque fillers may be previously disposed in a mold, such as a silicone mold, and then impregnated by a mixture comprising the at least one polymerizable component a), the copper complex c), the iodonium salt d) and the aromatic amine e) before application of light radiation.

The opaque filler may be one or more carbon fiber fabric layer. Such 2D fabric completely occults light irradiation that may be shun through a composition containing such carbon fiber fabric layer(s). As such, in exemplary embodiments, the opaque filler may be at least one carbon fiber fabric layer, and the composition comprising the at least one polymerizable component a), the copper complex c), the iodonium salt d) and the aromatic amine e), may be deposited on the carbon fiber fabric by coating, calendering, or flat die extrusion, prior to visible to middle-to-near UV irradiation. In that case, visible to middle-to-near UV irradiation may be advantageously conducted by passage in a UV-, middle-to-near UV- or visible light conveyor.

One stark advantage of the process is that crosslinking/curing of the composition may occur throughout the whole thickness of the composition, even in the presence of the opaque fillers in sufficient amount to occult the light. This allows the manufacture of thick composites, particularly laminate composites. For example, the sample to be cured/crosslinked is at least 1 cm thick, preferably at least 2 cm thick, mist preferably > 3 cm thick.

Advantageously, the process according to the invention can generally be carried out using conventional techniques of preparing polymerizable compositions in a suitable mixing device such as, but not limited to, stirred tanks, dissolvers, homogenizers, microfluidizers, extruders, or other equipment conventionally used in the field. Depending on the intended application of the composite, other fillers conventionally used in the field of composite materials may be used in admixture with the opaque fillers. For example glass fibers or beads may be added. Other reinforcements such as mineral, metallic or organic fillers (for example gravel, sand, glass beads, carbonate powder, alumina hydrate powder, steel powder, aluminum powder, polymer particles, titanium oxide, alumina, etc ...) may also be added.

### C) Copper complex

Important advantages of the copper complexes described herein include: (i) they generate free radicals under very mild irradiation conditions (e.g., λ=200-900nm, for example under the visible light range λ=390-700 nm); (ii) they undergo a photoredox catalytic cycle that initiates free radical promoted cationic photopolymerization; and more importantly (iii) when combined with a suitable iodonium salt and amine additive, they work in the presence of light-occulting amounts of opaque fillers when other conventional photoinitiators do not. Accordingly, the use of the tri-association copper complex/iodonium salt/amine of the invention under mild light irradiation conditions allows free radical photopolymerization, and concomitant free radical and cationic polymerizations, to process efficiently in the presence of light-occulting amounts of opaque fillers. This allows the preparation of opaque filler-containing composite materials by photopolymerization, including composites based on interpenetrated networks of polymers that have different polymerization mechanisms (free radical and cationic). This is a striking advantage, as compared to existing methods, which require the use of (more costly and energy demanding) thermal polymerization (because the presence of opaque fillers in the organic resin to be polymerized, hampers or prevents photopolymerization from taking place).

Advantageously, in the copper complex of formula I :
Q₁ may have the formula: 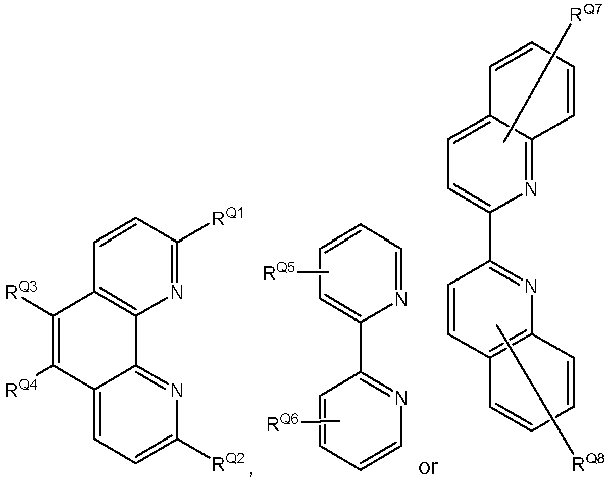 wherein
   R^{Q1} and R^{Q2} independently represent H or a linear or branched C₁₋₆alkyl moiety;
   R^{Q3} and R^{Q4} independently represent H or -NR^{C}R^{D} wherein R^{C} and R^{D} independently represent a linear or branched C₁₋₆alkyl moiety or a C₆₋₁₀aryl moiety; where R^{C} and R^{D} together may form a 5- or 6- membered heterocyclic moiety wherein the heterocyclic moiety may be further substituted with -CN, a linear or branched C₁₋₆alkyl moiety, a C₆₋₁₀aryl or C₆₋₁₂heteroaryl moiety;
   R^{Q5} and R^{Q6} independently represent H or a linear or branched C₁₋₁₀alkyl moiety; wherein the alkyl moieties may be independently further substituted with -NR^{E}R^{F} wherein R^{E} and R^{F} independently represent a linear or branched C₁₋₆alkyl moiety or a C₆₋₁₀aryl moiety, or wherein R^{E} and R^{F} together with the nitrogen atom to which they are attached form a mono- or polycyclic C₆₋₁₂heterocyclic moiety;
   R^{Q7} and R^{Q8} independently represent H or a linear or branched C₁₋₆alkyl moiety or a C₆₋₁₀aryl moiety;
      and
Q₂ and Q₃ independently may have the formula: 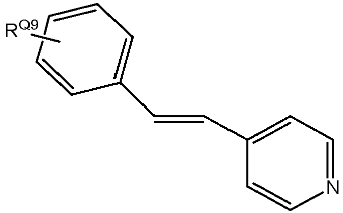 wherein R^{Q9} represents H or -NR^{G}R^{H} wherein R^{G} and R^{H} independently represent a linear or branched C₁₋₆alkyl moiety or a C₆₋₁₀aryl moiety.

Advantageously, in the copper complex of formula I, Q1 may be a fused polycyclic heteroaryl moiety having the formula: 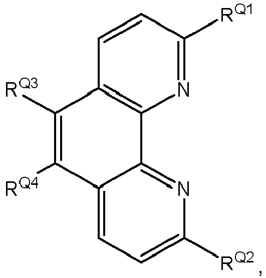 wherein
R^{Q1} and R^{Q2} independently represent H or a linear or branched C₁₋₆alkyl moiety; and
R^{Q3} and R^{Q4} independently represent H or -NR^{C}R^{D} wherein R^{C} and R^{D} independently represent a linear or branched C₁₋₆alkyl moiety or a C₆₋₁₀aryl moiety; where R^{C} and R^{D} together may form a 5- or 6- membered heterocyclic moiety wherein the heterocyclic moiety may be further substituted with -CN, a linear or branched C₁₋₆alkyl moiety, a C₆₋₁₀aryl or C₆₋₁₂heteroaryl moiety.

Advantageously, in the copper complex of formula II :
Q₂ and Q₃ independently may have the formula: 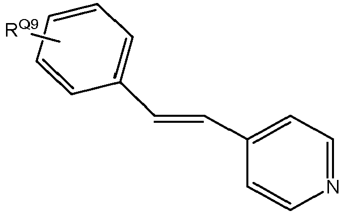 wherein R^{Q9} represents H or -NR^{G}R^{H} wherein R^{G} and R^{H} independently represent a linear or branched C₁₋₆alkyl moiety or a C₆₋₁₀aryl moiety.

Advantageously, the copper complex may have formula **I^{A}** or **II^{A}**: 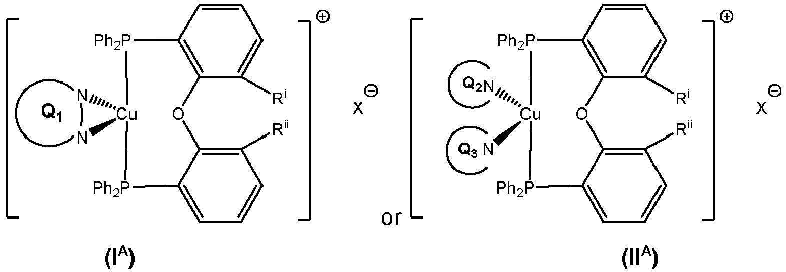 wherein Q₁, Q₂ and Q₃ are as defined above; and Rⁱ and Rⁱⁱ independently may represent H or a linear or branched C₁₋₆alkyl moiety.

Advantageously, the copper complex may have formula **I^{B}** or **II^{B}**: 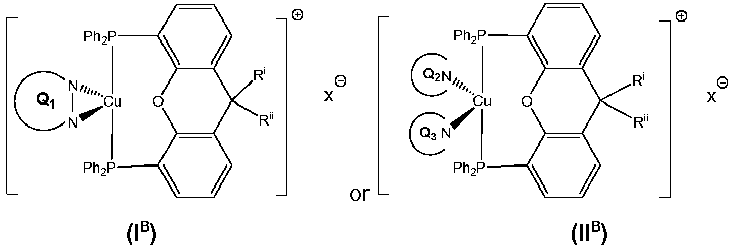 wherein Q₁, Q₂ and Q₃ are as defined above; and Rⁱ and Rⁱⁱ independently may represent H or a linear or branched C₁₋₆alkyl moiety.

Advantageously, the copper complex may have formula **I^{C}**: 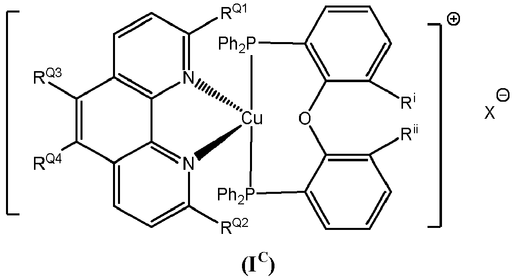 wherein
R^{Q1} and R^{Q2} independently represent H or a linear or branched C₁₋₆alkyl moiety;
R^{Q3} and R^{Q4} independently represent H or -NR^{C}R^{D} wherein R^{C} and R^{D} independently represent a linear or branched C₁₋₆alkyl moiety or a C₆₋₁₀aryl moiety; where R^{C} and R^{D} together may form a 5- or 6- membered heterocyclic moiety wherein the heterocyclic moiety may be further substituted with linear or branched C₁₋₆alkyl moiety or a C₆₋₁₀aryl or C₆₋₁₂heteroaryl moiety; and
Rⁱ and Rⁱⁱ independently represent H or a linear or branched C₁₋₆alkyl moiety.

Advantageously, the copper complex may have formula **I^{D}**: 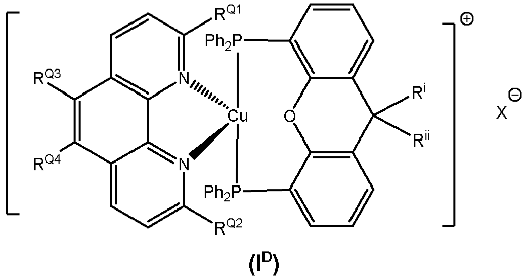 wherein
R^{Q1} and R^{Q2} independently represent H or a linear or branched C₁₋₆alkyl moiety;
R^{Q3} and R^{Q4} independently represent H or -NR^{C}R^{D} wherein R^{C} and R^{D} independently represent a linear or branched C₁₋₆alkyl moiety or a C₆₋₁₀aryl moiety; where R^{C} and R^{D} together may form a 5- or 6- membered heterocyclic moiety wherein the heterocyclic moiety may be further substituted with linear or branched C₁₋₆alkyl moiety or a C₆₋₁₀aryl or C₆₋₁₂heteroaryl moiety; and
Rⁱ and Rⁱⁱ independently represent H or a linear or branched C₁₋₆alkyl moiety.

In exemplary embodiments, in the copper complex of formula II, W may represent P, R₃ and R₄ may be absent and the P and W atoms may both be covalently bound to the aromatic system Q₂ or Q₃, and the copper complex may have formula **II^{C}**: 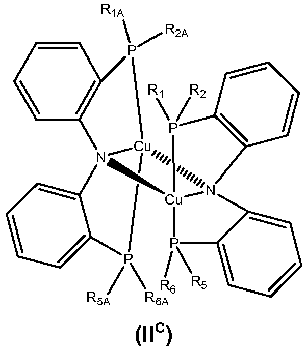 wherein
R₁, R₂, R₅, R₆, R_{1A}, R_{2A}, R_{5A} and R_{6A} each independently represents a C₄₋₂₀alkyl or C₆₋₁₀ aryl moiety; wherein the foregoing alkyl and/or aryl moieties may be independently further substituted with one or more linear or branched C₁₋₆alkyl or C₆₋₁₀ aryl moieties. For example, R₁, R₂, R₅, R₆, R_{1A}, R_{2A}, R_{5A} and R_{6A} may each independently represent a linear or branched C₄₋₁₀ alkyl moiety, such as *tert*-butyl.

Advantageously, the copper complex may have one of the following structures:

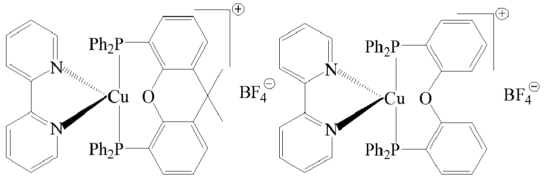

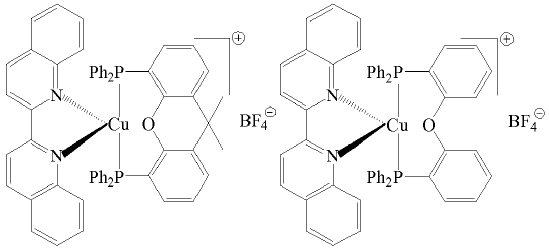

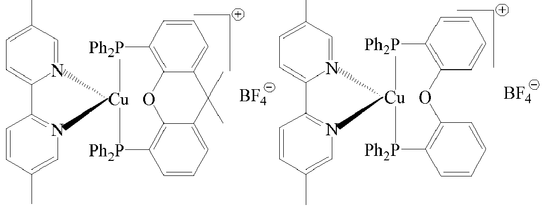

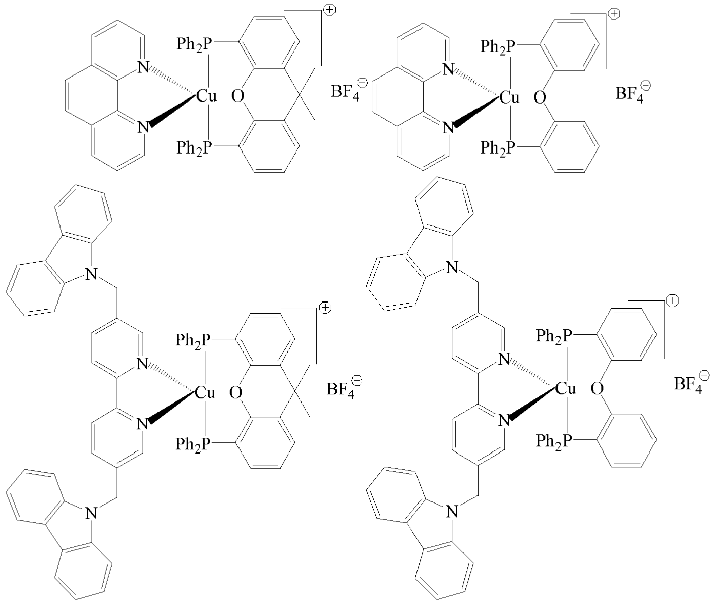

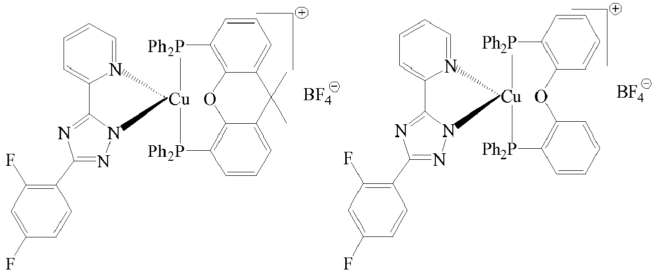

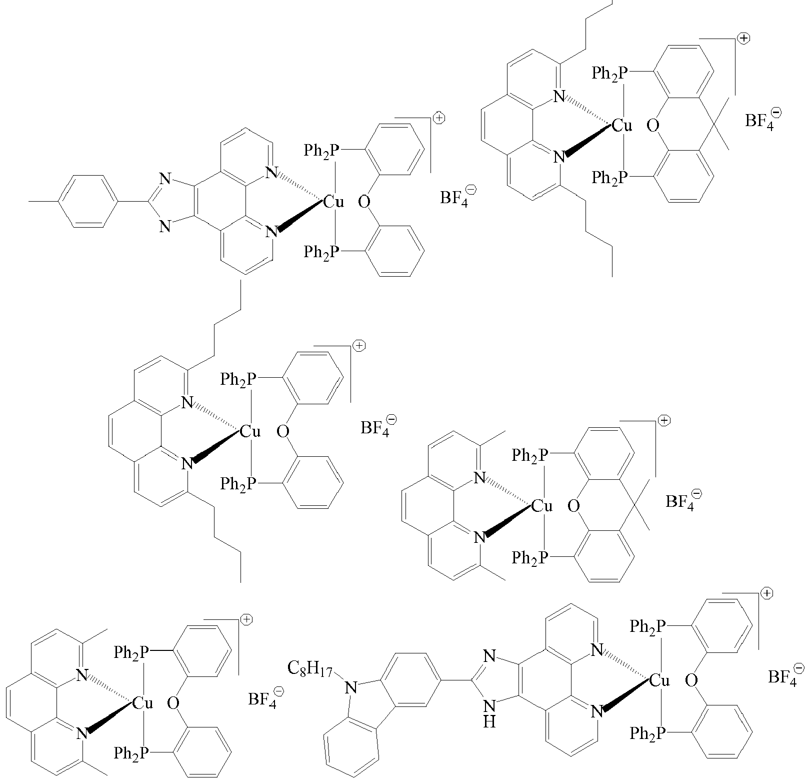

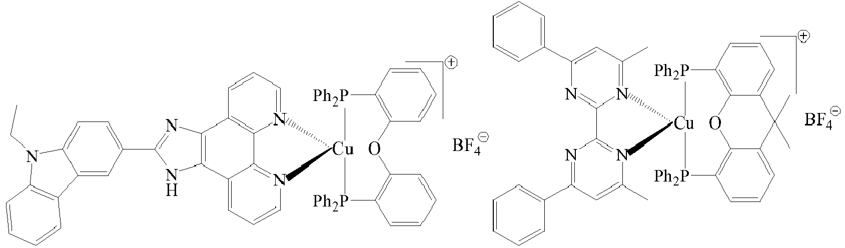

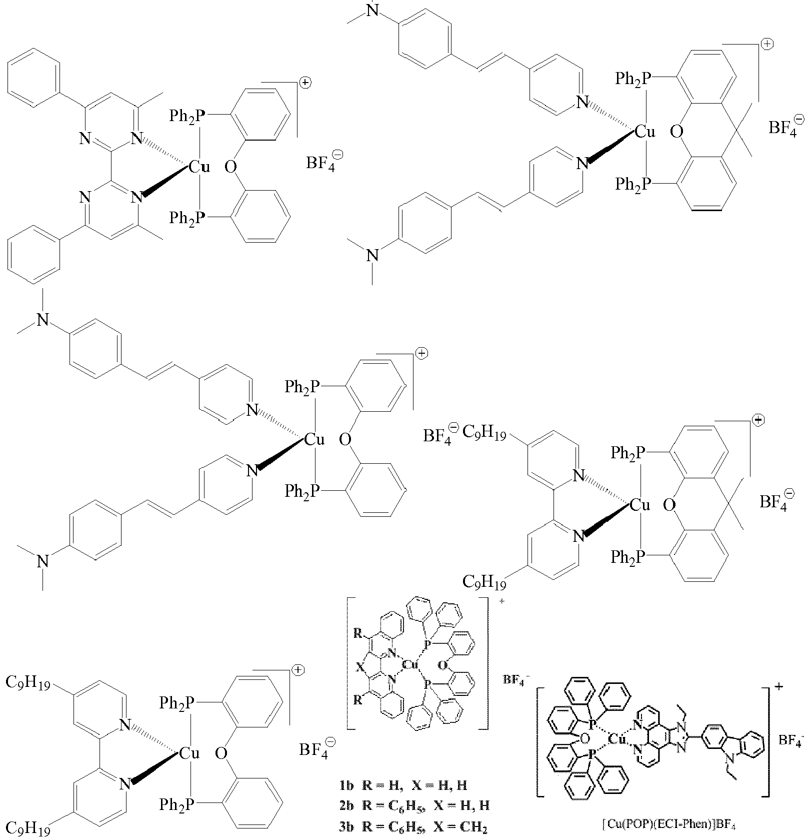

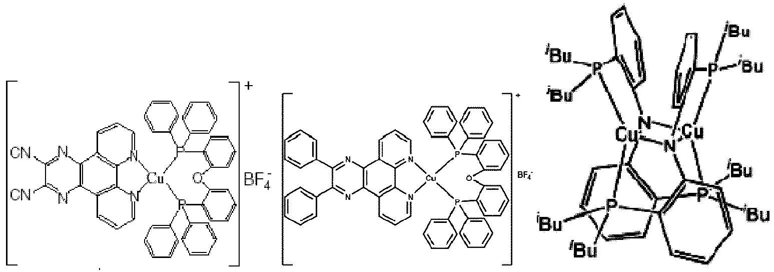

In complexes 1b and 2b above, « X=H,H » means that the corresponding positions on the quinolinyl groups are unsubstituted.

Preferably, the copper complex may have one of the following structures:

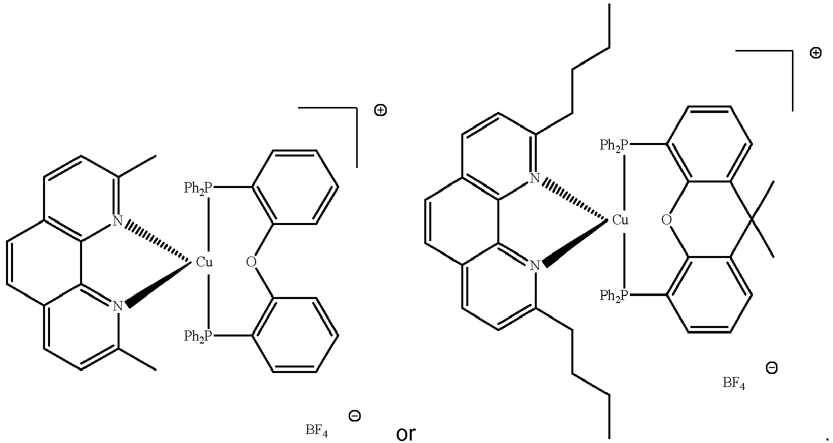

A particularly preferred copper complex is:

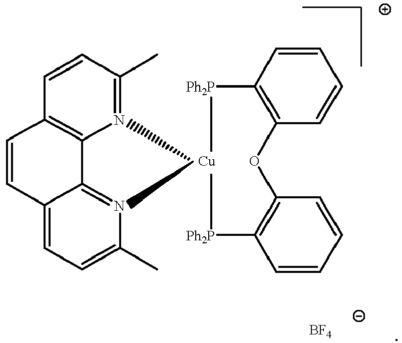

Advantageously, in the copper complex of formula I or II, the counterion X⁻ may represent BF₄⁻, PF₆, SbF₆⁻ or Cl⁻.

Advantageously, the copper complex may be used in 0.1-0.5 wt%, preferably 0.1-0.4 wt%, preferably 0.1-0.3 wt%, most preferably ≤0.25 wt% based on the total weight of components a), c), d) and e) recited above.

### D) lodonium salt

Advantageously, the iodonium salt may be of formula (R^{A})₂I⁺; wherein each occurrence of R^{A} independently represents a C₆₋₁₀ aryl moiety; wherein the aryl moiety may be, individually, further substituted with one or more linear or branched C₁₋₆alkyl or C₆₋₁₀aryl moieties

Advantageously, in the iodonium salt of formula (R^{A})₂I⁺, each occurrence of R^{A} independently may represent a phenyl moiety; wherein the phenyl moiety may be, individually, further substituted with one or more linear or branched C₁₋₆alkyl moieties. For example, the phenyl moiety may bear one or more methyl, ethyl, n-propyl, i-propyl, t-butyl groups, preferably in ortho position relative to the iodine atom.

Advantageously, the counterion of the iodonium salt of formula (R^{A})₂I⁺ may be any suitable negatively charged counterion. For example, it may be B(PhF₆)₄⁻, PF₆⁻, SbF₆⁻ or Cl⁻.

Advantageously, the iodonium salt may have one of the following structures:

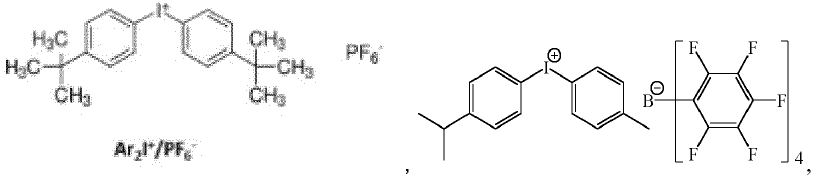

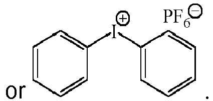

Advantageously, the iodonium salt may be used in 0.1-10.0 wt%, preferably 0.1-8.0 wt%, preferably 0.1-5.0 wt%, most preferably 1.0-5.0 wt% based on the total weight of components a), c), d) and e) recited above.

### E) Aromatic amine

The amine additive used in the process according to the invention should advantageously be electron rich. The amine additive may preferably be an electron donor, so as to improve the polymerization process by creating reactive species and to regenerate the copper complex in a catalytic cycle. In general terms, any organic compounds comprising at least one electron donor amine group may be suitable for carrying out the process according to the invention. A mixture of two or more electron donor amine additive can be used. Such suitable amine additives encompass aromatic amines. As used herein, the term "aromatic amine" refers to a compound having at least one amino group (primary, secondary, or tertiary amino groups) covalently bound directly to an aromatic moiety.

Advantageously, the aromatic amine may have one of the following structures:

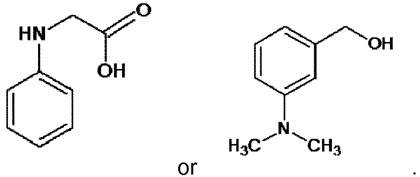

Advantageously, the aromatic amine may be used in 0.1-5.0 wt%, preferably 0.1-4.0 wt%, preferably 0.5-3.0 wt%, preferably 0.5-2.0 wt%, most preferably 0.5-1.5 wt% based on the total weight of components a), c), d) and e) recited above.

### Irradiation light source

For purposes of the present invention, any light source known in the art, capable of generating light in the visible and middle-to-near UV spectrum may be used. One advantage of the process of the invention is that it may be carried out under mild light irradiation. As used herein, the term "mild light irradiation" refers to the visible and middle-to-near UV spectrum, ranging from 200-900 nm in wavelengths. Advantageously, the mild light irradiation may be provided by any suitable light source producing light in the visible and/or middle-to-near UV spectrum. Advantageously, the mild light irradiation may be provided by a source of visible light. By visible light is meant the visible spectrum in the wavelengths from about 390 to 700 nm. Sources of visible light include LED bulbs, laser diode, green fluorescence bulbs, halogen lamps, household lamps including energy-saving lamps, or natural light. Advantageously, the mild light irradiation may be provided by a source of middle-to-near UV light. By middle-to-near UV light is meant the light spectrum in the wavelengths from about 200 to 390 nm. Sources of middle-to-near UV light include BLB type lamps, Mercury-vapor lamps, Sodium vapor lamps or Xenon arc lamps.

Advantageously, a UV-, middle-to-near UV- or visible light conveyor may be used. The speed of the UV-, middle-to-near UV- or visible light conveyor belt may be 1 to 4 meters per minute. Advantageously, fully cured polymer/opaque filler composite material may be obtained after 1 or 2 passes in the UV-, middle-to-near UV- or visible light conveyor, preferably after a single pass.

An important advantage of the invention is that photopolymerization can be effected under very mild irradiation conditions (for example, a simple household halogen lamp may be used) even in the presence of opaque fillers which prevents light from diffusing through the composite sample. As such, the process of the invention allows crosslinking/curing of the composite to occur throughout the whole thickness of the composite.

It is understood that the light source may be a tunable power light source; that is one that is equipped with tunable power, so as be able to adjust the power of the light irradiation (in the visible to middle-to-near UV range), if needed.

### Methods and uses

In another aspect, the present invention also provides the use of a copper complex as defined generally and in any variant above, for effecting visible to middle-to-near UV free radical photopolymerization and/or cationic photopolymerization of a composition comprising a light-occulting amount of opaque fillers.

The present invention also provides the use of the tri-association of:
a copper complex as defined generally and in any variant above,
an iodonium salt, and
an aromatic amine;
for effecting visible to middle-to-near UV free radical photopolymerization and/or cationic photopolymerization of a composition comprising a light-occulting amount of opaque fillers.

The present invention also provides the use a copper complex as defined generally and in any variant above, for preparing polymer/opaque filler composite materials wherein the polymer is an interpenetrated network of at least two polymers whose polymerization is effected by free radical photopolymerization and cationic photopolymerization, respectively, under visible to middle-to-near UV irradiation.

The present invention also provides the use of the tri-association of :
a copper complex as defined generally and in any variant above,
an iodonium salt, and
an aromatic amine;
for preparing polymer/opaque filler composite materials wherein the polymer is an interpenetrated network of at least two polymers whose polymerization is effected by free radical photopolymerization and cationic photopolymerization, respectively, under visible to middle-to-near UV irradiation.

In another aspect, the resent invention also provides the use of a copper complex as defined generally and in any variant above, for dark curing polymerizable compositions containing light-occulting amounts of opaque fillers, under visible to middle-to-near UV irradiation. As used herein, the term "dark curing" refers to continued polymerization after the visible to middle-to-near UV light source has been removed, i.e., the polymerization is not immediately terminated when the visible to middle-to-near UV light source is removed (the polymerization continues by thermal self-curing process).The present invention therefore provides a system for dark curing polymerizable monomers, as defined generally and in any variant herein, in an acceptable time frame and to a sufficient depth using a visible to middle-to-near UV - initiated three-component system. As such, the present invention also provides the use of the tri-association of :
a copper complex as defined generally and in any variant above,
an iodonium salt, and
an aromatic amine;
for dark curing polymerizable compositions containing light-occulting amounts of opaque fillers, under visible to middle-to-near UV irradiation.

The polymerizable component a), opaque fillers b), copper complex c), iodonium salt d), aromatic amine e) and irradiation light source may be as defined in any variant described above and herein.

Advantageously, the following proportions of c), d) and e) may be used:
- the copper complex c) may be used in 0.1-0.5 wt%, preferably 0.1-0.4 wt%, preferably 0.1-0.3 wt%, most preferably ≤0.25 wt% ;
- the iodonium salt d) may be used in 0.1-10.0 wt%, preferably 0.1-8.0 wt%, preferably 0.1-5.0 wt%, most preferably 1.0-5.0 wt% ;
- the aromatic amine e) may be used in 0.1-5.0 wt%, preferably 0.1-4.0 wt%, preferably 0.5-3.0 wt%, preferably 0.5-2.0 wt%, most preferably 0.5-1.5 wt%;
all wt% being expressed based on the total weight of components a), c), d) and e) recited above.

Advantageously, the duration of exposure of the polymerizable composition to visible to middle-to-near UV irradiation will depend on the irradiation intensity: the higher the intensity, the smaller the duration time necessary. Typically, for practical purposes, the duration of exposure of the resin to visible to middle-to-near UV irradiation should preferably be ≤10 minutes, more preferably ≤5 minutes.

It is to be understood that all the variants described herein, notably for the various components of the polymerizable composition according to the process of the invention are applicable *mutatis mutandis* to this section, and will be understood to apply to the processes/polymerization methods/uses defined in this section. This includes all the variants described in the "DETAILED DESCRIPTION OF CERTAIN PREFERRED EMBODIMENTS OF THE INVENTION" section of this document, including any one and all variants relating to the a) polymerizable component, b) opaque fillers, c) copper complex, d) iodonium salt, and e) aromatic amine. In addition, all the variants relating to the irradiation light source described in the present document are applicable *mutatis mutandis* to this section.

### Articles and composites

In another aspect, the present invention provides articles of manufacture and composites obtained by a process according to the invention, as described generally and in any variants herein.

Likewise, all the variants described herein, notably for the various components of the polymerizable composition according to the process of the invention are applicable *mutatis mutandis* to this section, and will be understood to apply to the articles/composites defined in this section. This includes all the variants described in the "DETAILED DESCRIPTION OF CERTAIN PREFERRED EMBODIMENTS OF THE INVENTION" section of this document, including any one and all variants relating to the a) polymerizable component, b) opaque fillers, c) copper complex, d) iodonium salt, and e) aromatic amine. In addition, all the variants relating to the irradiation light source described in the present document are applicable *mutatis mutandis* to this section.

The process may further include a step of adding any other additive(s) conventionally used in the field of composite materials. Examples of suitable additives include:
- pigments, such as colored pigments, fluorescent pigments, electrically conductive pigments, magnetically shielding pigments, metal powders, scratch-proofing pigments, organic dyes or mixtures thereof;
- light stabilizers such as benzotriazoles or oxalanilides;
- crosslinking catalysts such as dibutyltin dilaurate or lithium decanoate;
- slip additives;
- defoamers;
- emulsifiers, especially nonionic emulsifiers such as alkoxylated alkanols and polyols, phenols and alkylphenols or anionic emulsifiers, such as alkali metal salts or ammonium salts of alkanecarboxylic acids, alkanesulfonic acids, alkanol sulfonic acids or alkoxylated polyols, phenols or alkyl phenols;
- wetting agents such as siloxanes, fluorinated compounds, carboxylic monoesters, phosphoric esters, polyacrylic acids or their copolymers, polyurethanes or acrylate copolymers, which are commercially available under the trademark MODAFLOW ® or DISPERLON ®;
- adhesion promoters such as tricyclodecan-dimethanol;
- leveling agents;
- film-forming adjuvants such as cellulose derivatives;
- flame retardants;
- sag control agents such as ureas, modified ureas and / or silicas,
- rheology control additives such as those described in patent documents WO 94/22968 **[2]**, EP0276501A1 **[3]**, EP0249201A1 **[4]**, and WO 97/12945 **[5]**;
- crosslinked polymeric microparticles, as described for example in EP0008127A1 **[6]**;
- inorganic phyllosilicates such as aluminum magnesium silicate, magnesium sodium silicates or magnesium fluoride sodium lithium phyllosilicates of montmorillonite type;
- silicas such as aerosils® silicas;
- flatting agents such as magnesium stearate; and/or
- tackifiers.

Mixtures of at least two of these additives are also suitable in the context of the invention.

As used herein, the term "tackifier" refers to polymers which increase the tack properties, that is to say, the intrinsic viscosity or self-adhesion, the compositions so that, after a slight pressure a short period, they adhere firmly to surfaces.

### Synthetic methods

The practitioner has a well-established literature of synthetic organic and inorganic chemistry and polymer chemistry to draw upon, in combination with the information contained herein, for guidance on synthetic strategies, protecting groups, and other materials and methods useful for the reduction to practice of the process according to the present invention and composite materials obtainable by the process. For example, the reader may refer to the Exemplification section below, and references cited therein for synthetic approaches suitable for the preparation of some of the compositions described herein. The reader may refer for example to reference **[7]**, which relates to copper complexes usable in the context of the present invention.

The present invention finds application in a wide variety of fields, particularly those involving polymer composite materials containing opaque fillers.

### EQUIVALENTS

The representative examples that follow are intended to help illustrate the invention, and are not intended to, nor should they be construed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, exemplification and guidance that can be adapted to the practice of this invention in its various embodiments and the equivalents thereof.

### EXEMPLIFICATION

The composite materials of this invention and processes for their preparation can be understood further by the examples that illustrate some of the processes by which these composite materials are prepared or used. It will be appreciated, however, that these examples do not limit the invention. Variations of the invention, now known or further developed, are considered to fall within the scope of the present invention as described herein and as hereinafter claimed.

The investigated copper complex (G1) and other chemical compounds used in the Examples that follow to illustrate exemplary embodiments of how the invention may be reduced to practice are shown in Schemes 1 and 2.

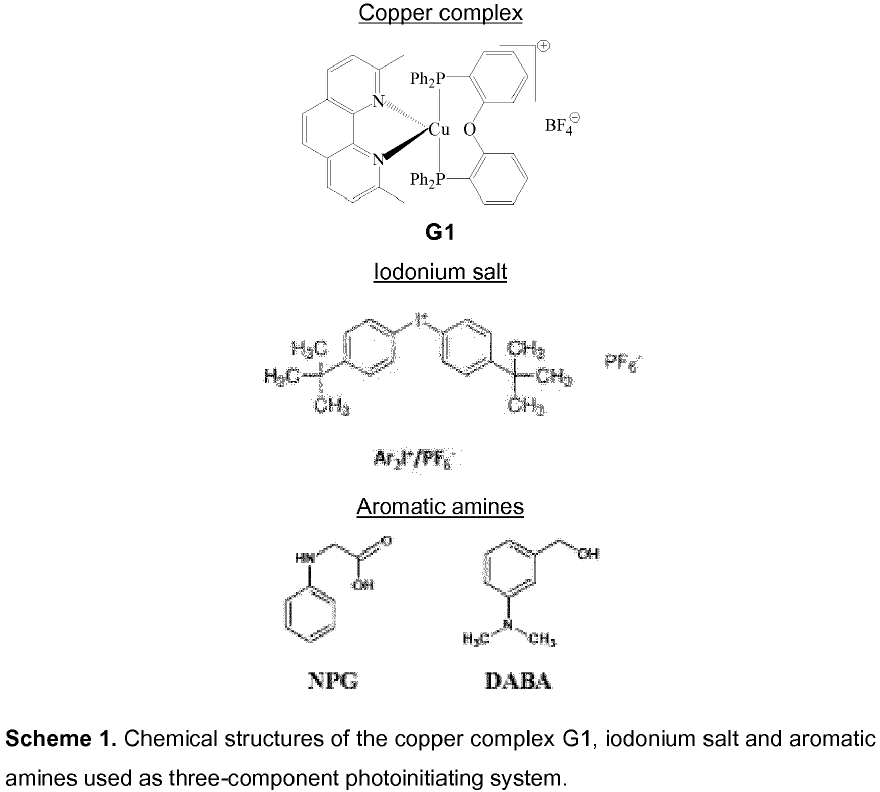

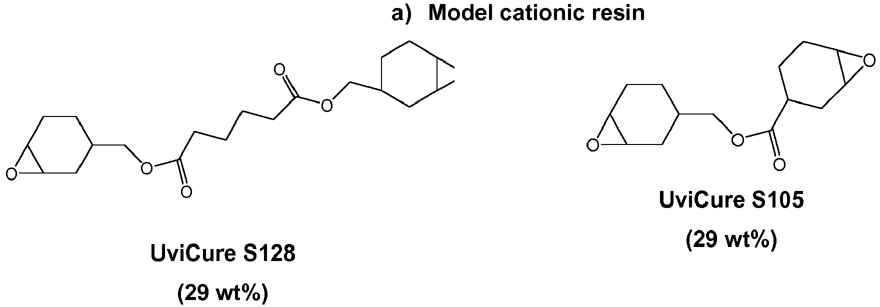

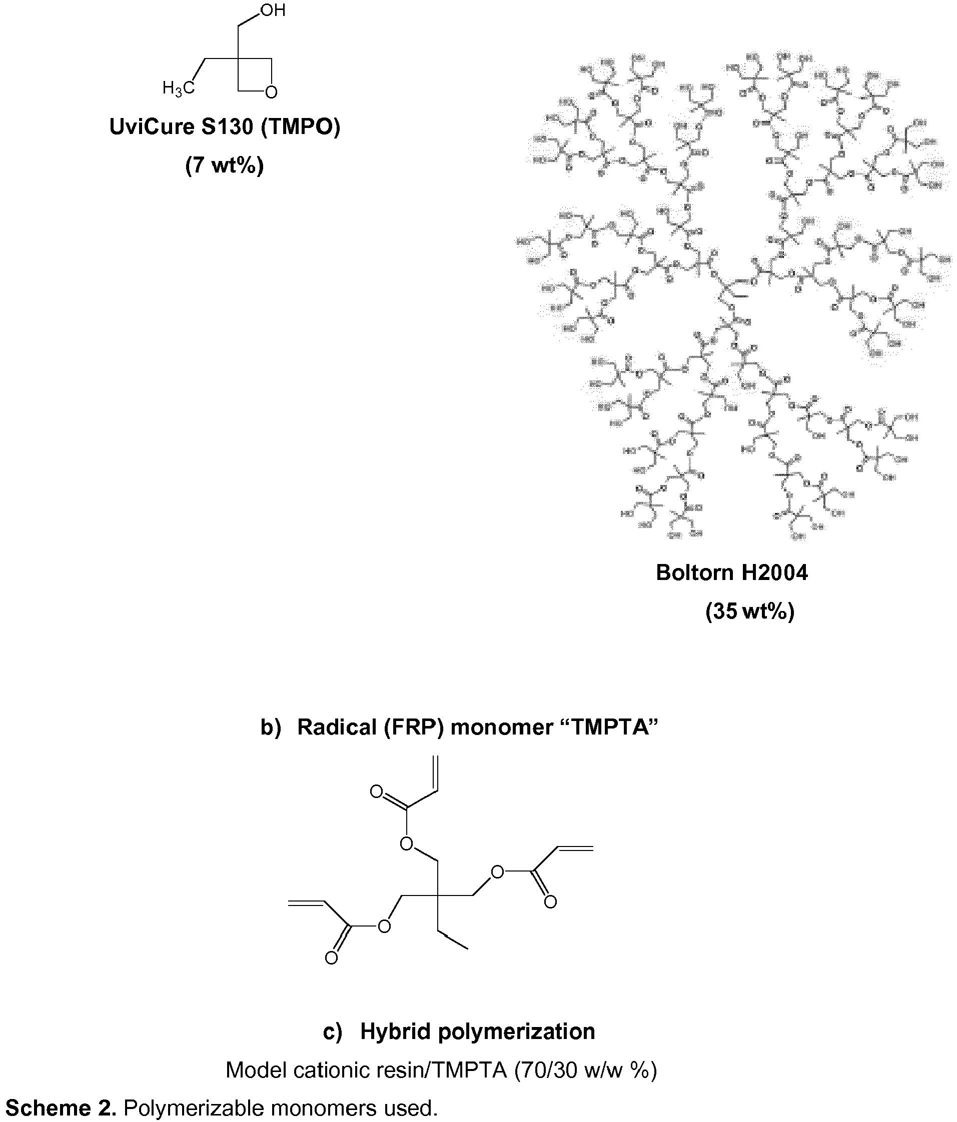

Comparative Examples were carried out with commercially available photoinitiators Irgacure 369® and BPO (instead of copper complex G1):

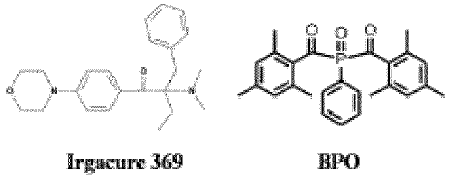

### Materials and methods

Copper complex G1 was prepared as described in WO 2015/132295. **[7]**

All other reagents and solvents were purchased from Aldrich or Alfa Aesar and used as received without any further purification.

### Example 1 - Performance of photoinitiating system of the invention vs. Commercial photoinitiators

Experiments were carried out in which carbon fibers were impregnated with organic resin to be polymerized (50% organic resin/50% carbon fibers) using a Dymax UV conveyor (Hg-Fe lamp, I = 850 mW/cm², λ= 200-450 nm).The organic resins tested were TMPTA (free radical photopolymerization) and Model cationic resin/TMPTA (70/30 w/w %,dual cationic/free radical polymerization). By comparing under the same experimental conditions (UV conveyor belt speed = 2m/min, one carbon fiber layer), rapid polymerization was observed using G1/SC 938/NPG or DABA as photoinitiating system where a single pass was sufficient to have tack-free surfaces for both free radical and hybrid (free radical/cationic) polymerizations.

On the contrary, for commercial photoinitiators (BPO and Irgacure 369), several passes were necessary without complete polymerization (Figure 1).

The compositions of the photoinitiating systems tested are provided in Table 1 (% wt are expressed with respect to the total weight of organic resin + photoinitiator. The tested photoinitiators were BPO, Irgacure 369, and a three-component system according to the present invention (copper complex/iodonium salt/amine)).

This Example demonstrated the exceptional reactivity of the three-component system G1/lodonium salt/amine in the production of composite materials.

A low weight % (0.2 wt% based on the total weight of organic resin + photoinitiating system) was sufficient to achieve excellent reactivity (Table 1). Unlike G1, the performance of BPO and Irgacure 369® was not improved even by increasing the concentration from 0.2 to 1.9%. It is important to note that by having a molar concentration 17 times higher than G1, the production of composite materials was not possible for commercial photoinitiators.

Table 1: Performance of a photoinitiating system according to the present invention (G1/iodonium salt/NPG or DABA) compared to commercial photoinitiators for free radical photopolymerization of TMPTA and cationic/radical polymerization of Model cationic resin/TMPTA (70/30 w/w %). UV conveyor belt speed = 2m/min, λ= 200-450 nm, one carbon fiber layer as opaque filler.

### Example 2 - Optimization of lodonium salt amount

The system G1/iodonium salt/NPG or DABA having shown excellent reactivity for the production of composite materials, the optimization of the three-component photoinitiating system, more precisely the optimization of the quantity of iodonium was investigated, notably to assess cost reduction of the final formulation.

Figure 2 shows that for free radical polymerization of TMPTA the amount of iodonium can be significantly reduced from 5% to 2%, while maintaining good efficiency for the production of composite materials.

Remarkable efficacy was also observed for hybrid radical/cationic polymerization of Model cationic resin/TMPTA (70/30 w/w %) (Figure 3). Regardless of the amine used, an optimum iodonium concentration (2%wt) was sufficient for rapid polymerization. Under these conditions, fully cured composite materials can be formed after a single pass.

In conclusion, the quantity of iodonium salt can be greatly reduced in order to reduce the cost of the final formulation, without affecting the efficacy of the overall process. This is of great benefit for industrial applications.

### Example 3 - Dark Polymerization of Model cationic resin

Example 1 was repeated using Model cationic resin alone as polymerizable component, except that light irradiation was stopped after one pass under the UV conveyor, and the sample was stored for 3 days in the dark at room temperature.

After a few days of storage at room temperature, complete polymerization (full curing) was observed (Table 2). A single pass was sufficient to have a good efficiency after storage in the dark. This demonstrates that cationic polymerization continued in the dark. As there are enough reactive species formed after a certain irradiation time, polymerization can take place after storage and in the dark.

### Example 4 - Access to thick composite samples and effect of UV conveyor speed

Low light penetration is often a strong limitation for photopolymerization of thick samples. Table 3 exemplifies the excellent efficiency of photoinitiating systems according to the invention (G1/iodonium salt/NPG) for access to thicker composite materials using several layers of opaque fillers (2 or 3 carbon fiber layers) while maintaining good reactivity. The experiments were carried out using TMPTA as polymerizable component (free radical photopolymerization). Interestingly, as shown in Table 3, it was possible to reduce the amount of iodonium salt and increase the speed of the conveyor without negatively impacting efficacy. The results highlight the reactivity of the three-component system G1/iodonium salt/NPG amine to produce thick composite materials with several layers of opaque fillers (several carbon fiber layers).

A similar experiment was conducted using Model cationic resin/TMPTA (70/30 w/w %) as polymerizable component (dual cationic/radical polymerization), and NPG or DABA as aromatic amine (Tables 4 and 5, respectively). Tables 4 and 5 show that dual cationic/radical polymerization was also observed for rapid and efficient polymerization of thick samples. This illustrates that, regardless of the experimental conditions, access to composite materials was always possible.

In summary, for the first time - to our knowledge - a new process for the production of opaque filler-based composite materials by photopolymerization using relatively mild (low intensity) irradiation conditions is presented herein. To that end, a three-component photoinitiating system (copper complex/lodonium salt/aromatic amine) was used for effecting radical polymerization as well as for simultaneous radical/cationic polymerization (access to interpenetrated polymer networks). The inventive technology allows access to thick composite samples (full curing through the whole thickness of polymer samples filled with opaque fillers) and renders possible reduction in the amount of iodonium salt, while maintaining excellent performance. The inventive system also allows for dark polymerization to process which presents an additional benefit. A comparison with commercial photoinitiators clearly shows the superior efficacy of systems and processes according to the present invention.

Composite materials have significant advantages over traditional materials. They provide many functional advantages: light weight, mechanical and chemical resistance, reduced maintenance. They make it possible to increase the life-span of certain equipment thanks to their mechanical and chemical properties. In each of the relevant application markets (e.g., automotive, construction, electricity, industrial equipment, etc.), these remarkable performances are at the origin of innovative technological solutions. The present invention provides a solution to longstanding great challenges for industrial applications. Specifically, carbon fibers have advantages over glass fibers currently used in industry in that they are good thermal conductors, are lighter and are characterized by good mechanical and chemical resistance. Carbon fiber-based composite materials also enrich design possibilities by making it possible to lighten structures and to produce complex shapes that can perform several functions. However, because carbon fibers are opaque, thus far photopolymerization of carbon fiber-based composites has been very difficult, and impossible in industrial settings, due to the low penetration of light into these materials. photopolymerization was not possible to prepare carbon fiber-based composite materials. This is now rendered possible by the present invention. The three-component photoinitiating system provided by the present invention have been shown to be very reactive and to allow photo-activated polymerization of opaque filler/composites in a very efficient way.

While we have described a number of embodiments of this invention, it is apparent that our basic examples may be altered to provide other embodiments that utilize the catalysts and methods of this invention. Therefore, it will be appreciated that the scope of this invention is to be defined by the appended claims rather than by the specific embodiments that have been represented by way of example.

### REFERENCES

1. "Handbook of Epoxy Resins," Lee & Neville, Mc Graw-Hill (1982), "Chemistry and technology of the epoxy Resins," B. Ellis, Chapman Hall (1993), New York and "Epoxy Resins Chemistry and technology," C. A. May, Marcel Dekker, New York (1988).
2. WO 94/22968
3. EP0276501A1
4. EP0249201A1
5. WO 97/12945
6. EP0008127A1
7. WO 2015/132295.

## Claims

1. A process for preparing polymer/opaque filler composite materials comprising a step of exposing to visible to middle-to-near UV irradiation a composition comprising:
(a) at least one polymerizable component selected from:
(i) an ethylenically unsaturated monomer, the polymerization of which may be effected by free radical polymerization;
(ii) an ethylenically unsaturated monomer, a cyclic ether-containing monomer or a polyol monomer; the polymerization of which may be effected by cationic polymerization;
(iii) or a mixture of at least one monomer (i) and at least one monomer (ii); and
(b) a light-occulting amount of opaque fillers;
in the presence of a photoinitiating system comprising:
(e) a copper complex of formula **I** or **II**: 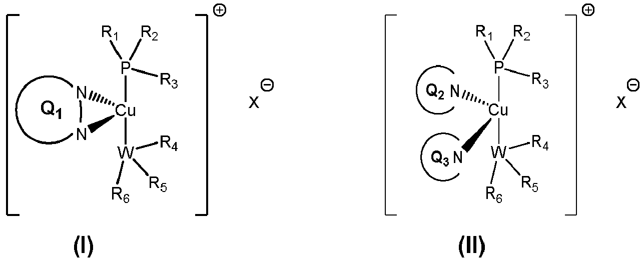 wherein
Q₁ represents a conjugated polyaromatic system containing two nitrogen atoms whose lone pair of electrons forms a bond with the copper atom;
Q₂ and Q₃ independently represent a conjugated polyaromatic system containing one nitrogen atom whose lone pair of electrons forms a bond with the copper atom;
W represents a phosphorus or nitrogen atom;
R₁, R₂, R₃, R₄, R₅ and R₆ each independently represents a C₆₋₂₀ alkyl or C₆₋₁₀ aryl moiety; wherein the foregoing alkyl and/or aryl moieties may be independently further substituted with one or more linear or branched C₁₋₆alkyl or C₆₋₁₀ aryl moieties, optionally bearing a C1-linker and/or a heteroatom such as O or S connecting R³ and R⁴; and wherein R₃ and R₄, together with the P, Cu and W atoms, may form a 6- to 8-membered ring; and
X represents a suitable counterion; preferably BF₄⁻, PF₆, SbF₆⁻ or Cl⁻;
(f) at least one iodonium salt; and
(e) at least one aromatic amine.

2. A process according to claim 1, wherein the ethylenically unsaturated monomer whose polymerization may be effected by free radical polymerization comprises at least two acrylate or methacrylate groups; for example:

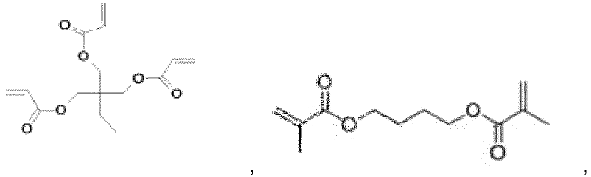

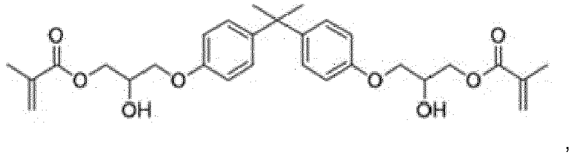

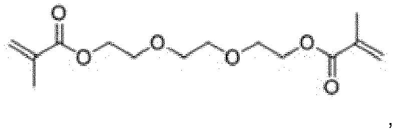

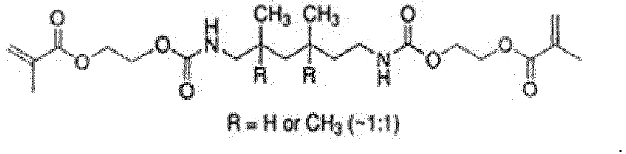

3. A process according to claim 1, wherein the cyclic ether-containing monomer whose polymerization may be effected by cationic polymerization is selected from aliphatic, heteroaliphatic, aromatic or heteroaromatic polyfunctional epoxy or oxetane compounds;
for example the cyclic ether-containing monomer is selected from:
- mono- or poly-functional heteroaliphatic epoxy or oxetane compounds such as: 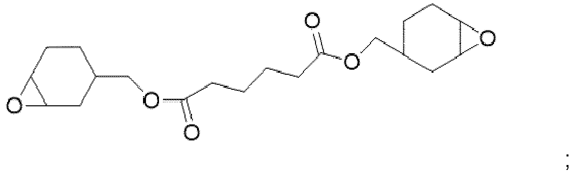 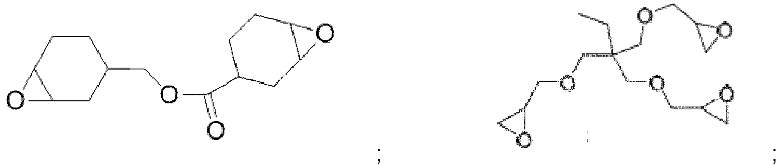 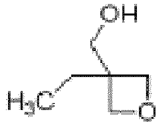
- polyfunctional aromatic epoxy compounds such as: 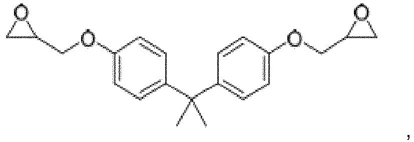 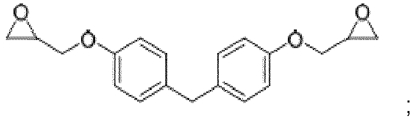
- epoxy prepolymers obtained from reaction of diols with epichlorhydrine, such as bisphenol A diglycidyl ether, 1,4-butanediol diglycidyl ether;
- epoxy prepolymers obtained from reaction of diamines with epichlorhydrine, such as 4,4'-diaminodiphenyl methane tetraglycidyl ether;
- or a mixture of two or more of the above.

4. A process according to claim 1, wherein the polyol monomer whose polymerization may be effected by cationic polymerization if a dendritic polyol, preferably a fatty acid modified dendritic polyol monomer such as : 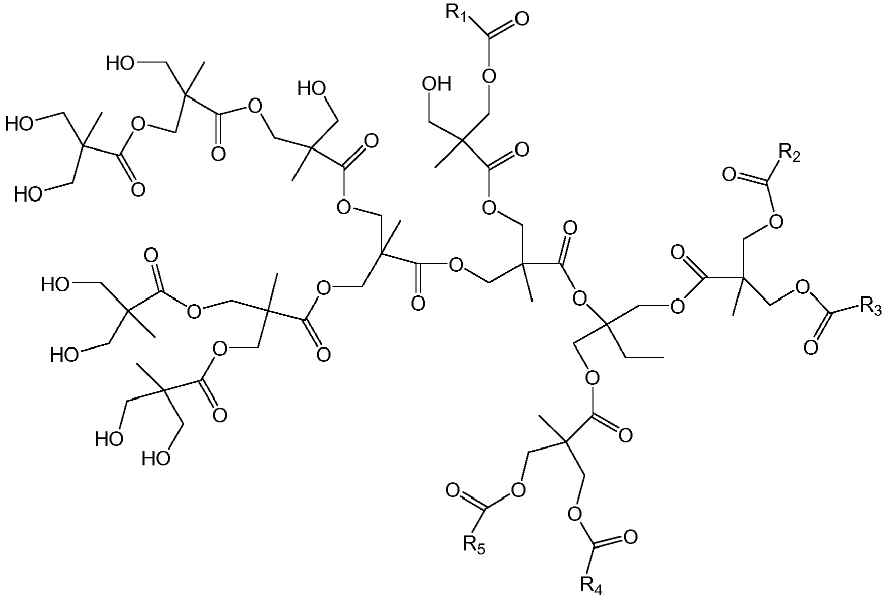 wherein R1, R2, R3, R4 and R5 are as defined below:

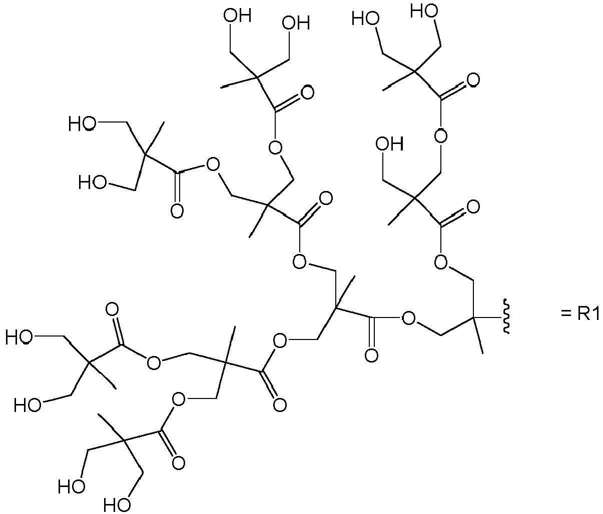

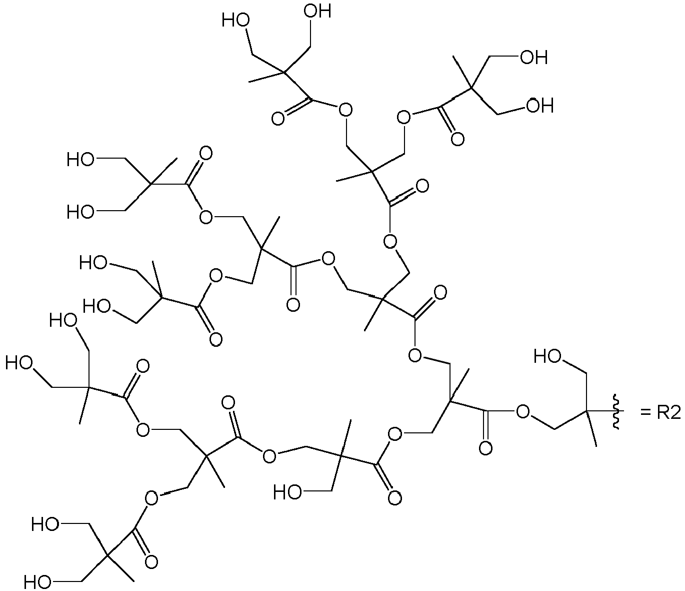

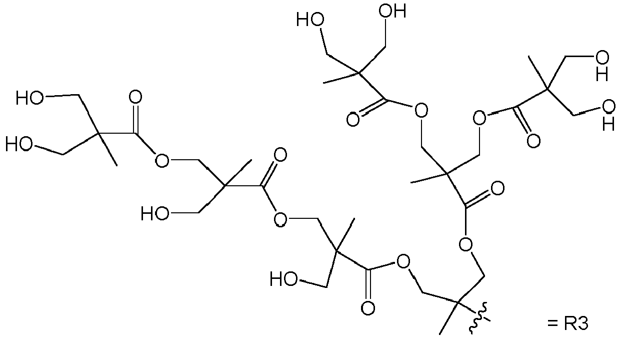

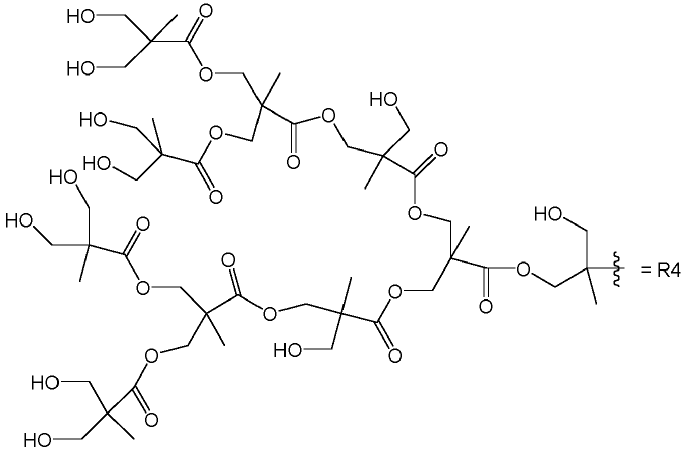

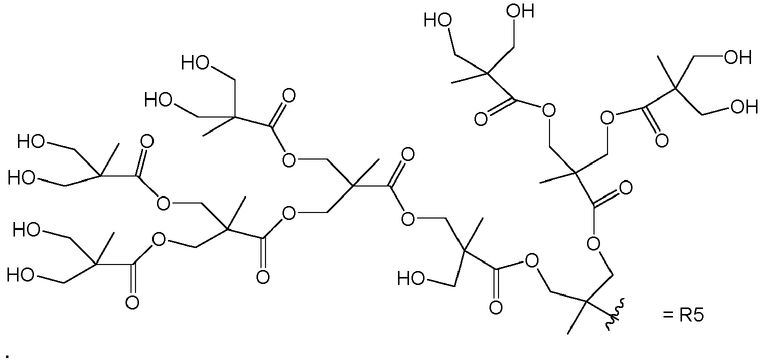

5. A process according to any one of claims 1 to 4, wherein in the copper complex:
Q₁ has the formula: 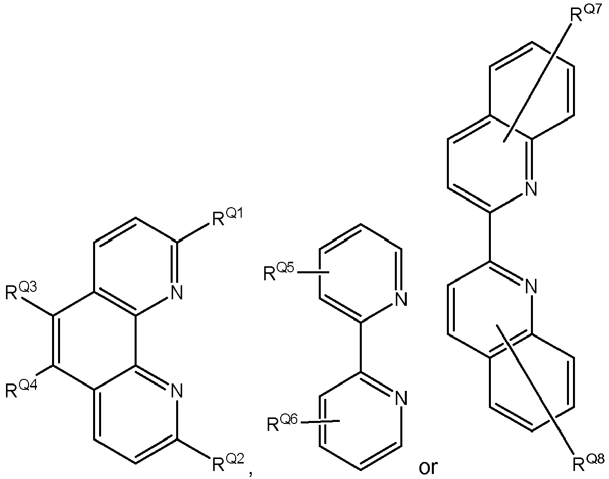 wherein
R^{Q1} and R^{Q2} independently represent H or a linear or branched C₁₋₆alkyl moiety; R^{Q3} and R^{Q4} independently represent H or -NR^{C}R^{D} wherein R^{C} and R^{D} independently represent a linear or branched C₁₋₆alkyl moiety or a C₆₋₁₀aryl moiety; where R^{C} and R^{D} together may form a 5- or 6- membered heterocyclic moiety wherein the heterocyclic moiety may be further substituted with -CN, a linear or branched C₁₋₆alkyl moiety, a C₆₋₁₀aryl or C₆₋₁₂heteroaryl moiety;
R^{Q5} and R^{Q6} independently represent H or a linear or branched C₁₋₁₀alkyl moiety; wherein the alkyl moieties may be independently further substituted with -NR^{E}R^{F} wherein R^{E} and R^{F} independently represent a linear or branched C₁₋₆alkyl moiety or a C₆₋₁₀aryl moiety, or wherein R^{E} and R^{F} together with the nitrogen atom to which they are attached form a mono- or polycyclic C₆₋₁₂heterocyclic moiety;
R^{Q7} and R^{Q8} independently represent H or a linear or branched C₁₋₆alkyl moiety or a C₆₋₁₀aryl moiety;
and
Q₂ and Q₃ independently have the formula: 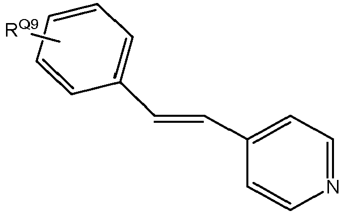 wherein R^{Q9} represents H or -NR^{G}R^{H} wherein R^{G} and R^{H} independently represent a linear or branched C₁₋₆alkyl moiety or a C₆₋₁₀aryl moiety.

6. A process according to any one of claims 1 to 5, wherein the copper complex has formula **I^{A}** or **II^{A}**: 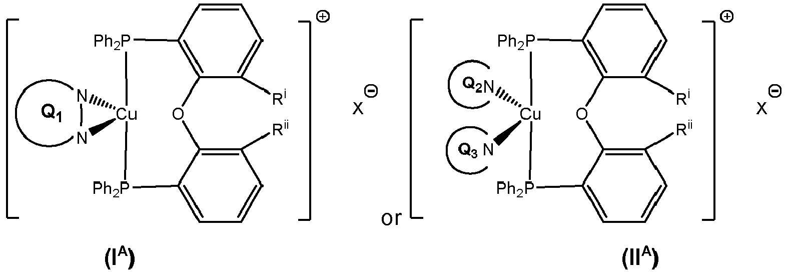 wherein Q₁, Q₂ and Q₃ are as defined in claim 1; and Rⁱ and Rⁱⁱ independently represent H or a linear or branched C₁₋₆alkyl moiety.

7. A process according to any one of claims 1 to 6, wherein the copper complex has formula **I^{B}** or **II^{B}**: 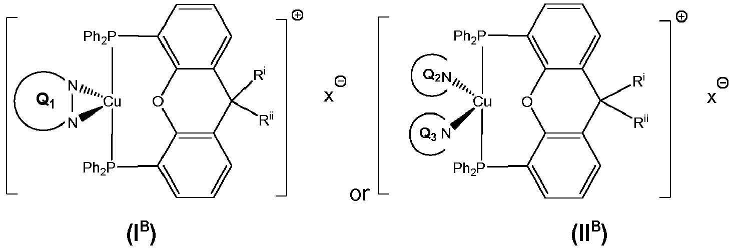 wherein Q₁, Q₂ and Q₃ are as defined in claim 1; and Rⁱ and Rⁱⁱ independently represent H or a linear or branched C₁₋₆alkyl moiety.

8. A process according to any one of claims 1 to 7, wherein the copper complex has one of the following structures:

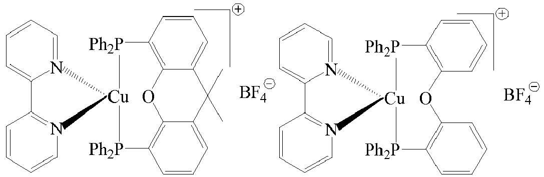

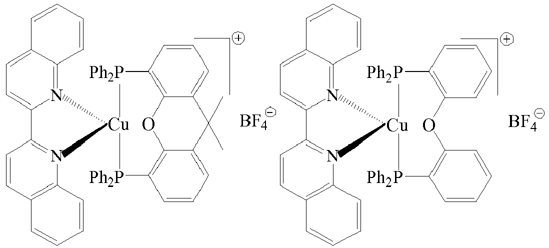

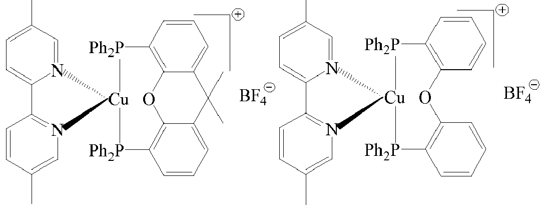

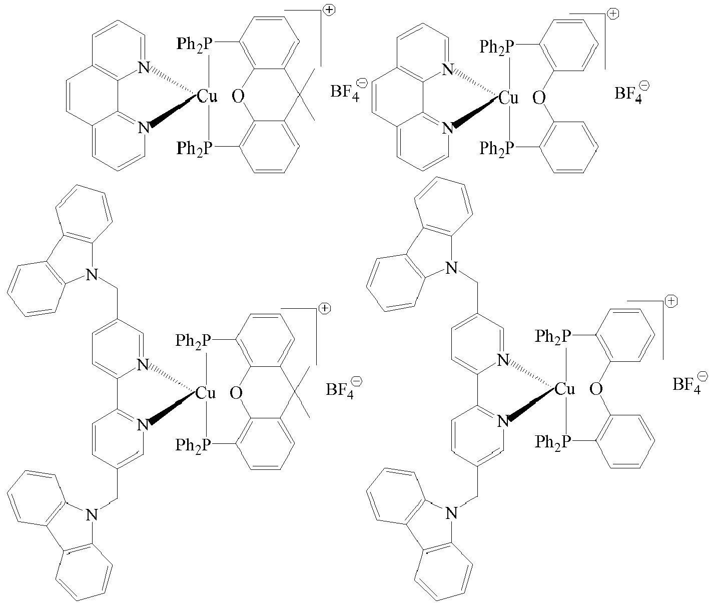

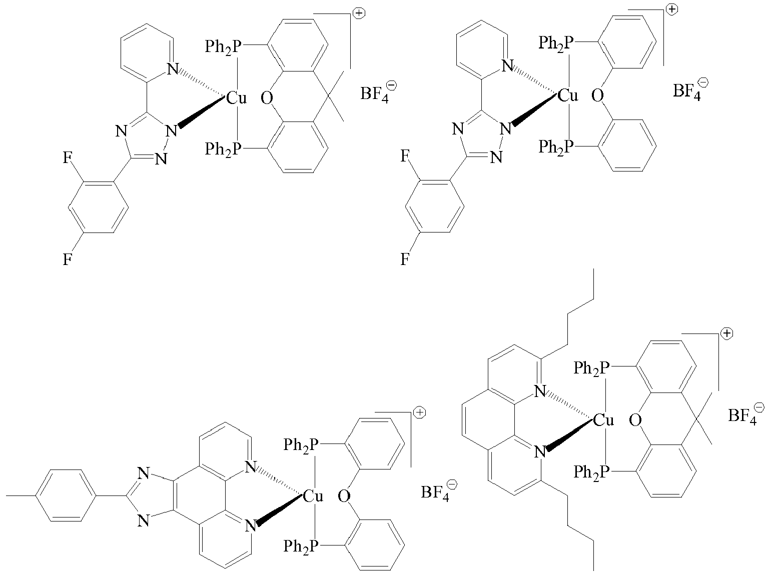

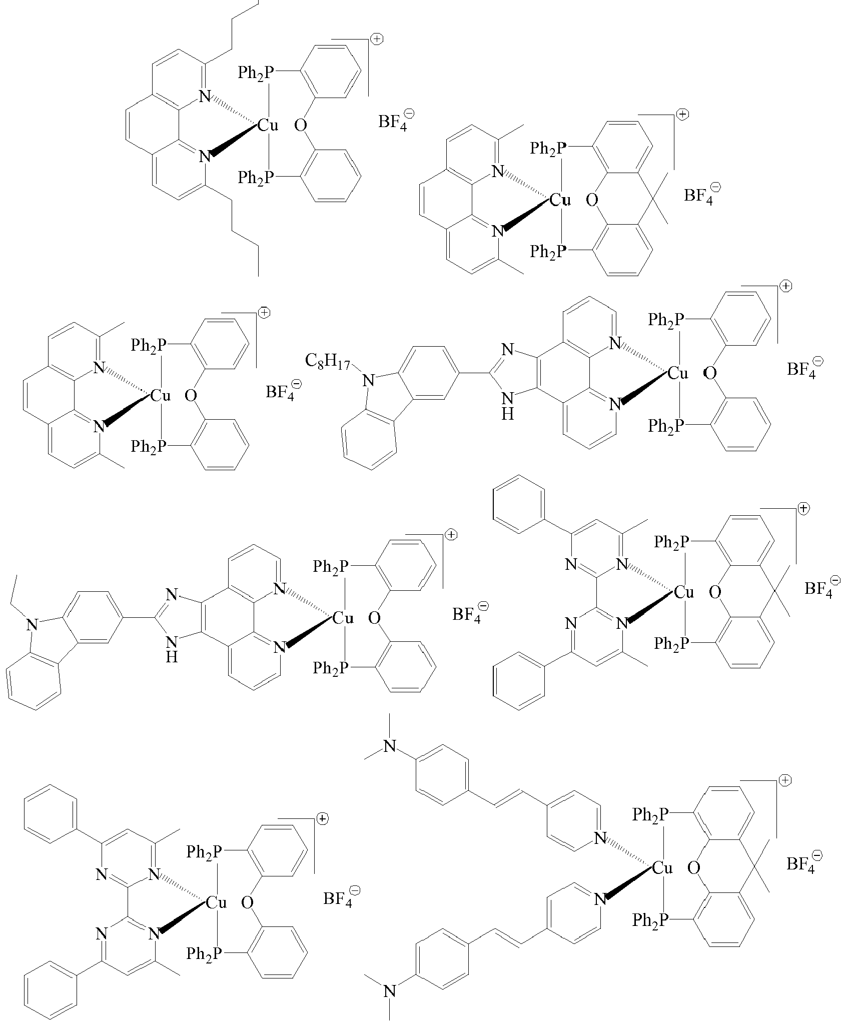

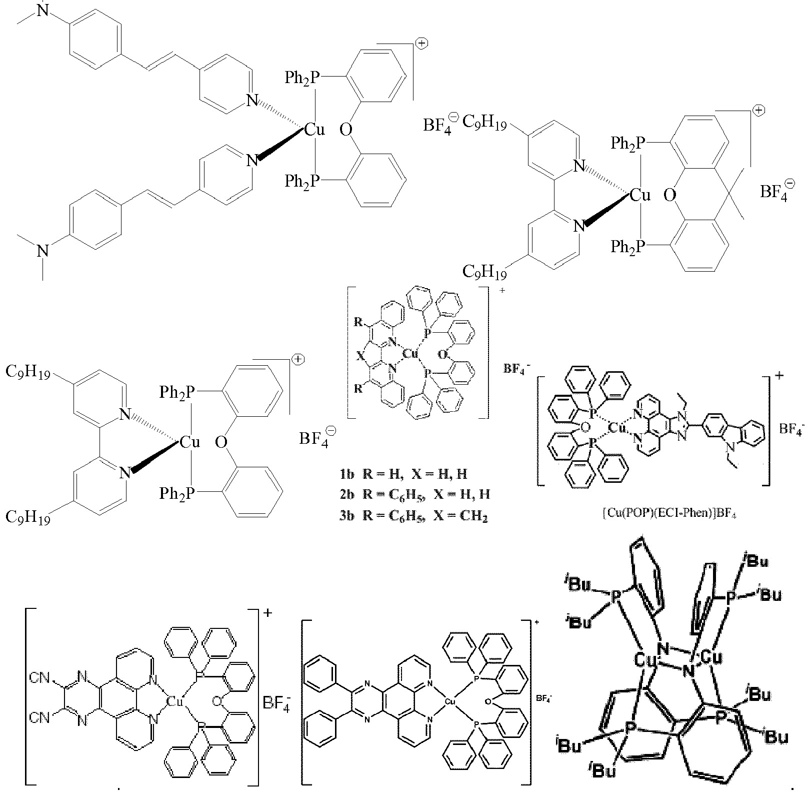

9. A process according to any one of claims 1 to 8, wherein the iodonium salt is of formula (R^{A})₂I⁺; wherein each occurrence of R^{A} independently represents a C₆₋₁₀ aryl moiety; wherein the aryl moiety may be, individually, further substituted with one or more linear or branched C₁₋₆alkyl or C₆₋₁₀aryl moieties; such as

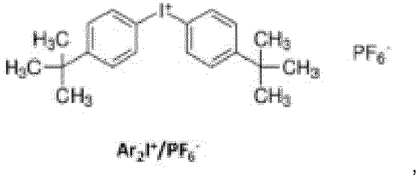

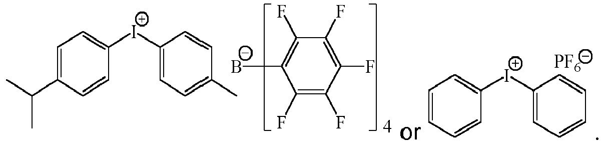

10. A process according to any one of claims 1 to 9, wherein the aromatic amine is

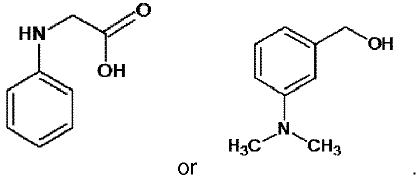

11. A process according to any one of claims 1 to 10, wherein the opaque fillers are aramid fibers, basalt fibers, silica fibers, metallic fillers such as metallic nanaoparticles, polymer fibers, natural fibers or carbon-based fillers such as carbon black, biochar, carbon fibers, carbon fiber fabrics or carbon nanostructures (such as carbon nanotubes or graphene), or a mixture of two or more of those; preferably carbon fiber fabrics.

12. A process according to any one of claims 1 to 11, wherein the visible to middle-to-near UV irradiation is in the λ=200-900 nm range; for example in the visible range λ=390-700 nm.

13. A process according to any one of claims 1 to 12, wherein the copper complex is used in 0.1-0.5 wt%, preferably 0.1-0.4 wt%, preferably 0.1-0.3 wt%, most preferably ≤0.25 wt% based on the total weight of components a), c), d) and e) recited in claim 1.

14. A process according to any one of claims 1 to 13, wherein the iodonium salt is used in 0.1-10.0 wt%, preferably 0.1-8.0 wt%, preferably 0.1-5.0 wt%, most preferably 1.0-5.0 wt% based on the total weight of components a), c), d) and e) recited in claim 1.

15. A process according to any one of claims 1 to 14, wherein the aromatic amine is used in 0.1-5.0 wt%, preferably 0.1-4.0 wt%, preferably 0.5-3.0 wt%, preferably 0.5-2.0 wt%, most preferably 0.5-1.5 wt% based on the total weight of components a), c), d) and e) recited in claim 1.

16. A process according to any one of claims 1 to 15, wherein the opaque filler is at least one carbon fiber fabric layer, and visible to middle-to-near UV irradiation is conducted by passage in a UV-, middle-to-near UV- or visible light conveyor.

17. A process according to any one of claims 1 to 16, wherein the polymerizable component comprises (i) an ethylenically unsaturated monomer polymerizable by free radical polymerization and (ii) an ethylenically unsaturated monomer, a cyclic ether-containing monomer or a polyol monomer; the polymerization of which may be effected by cationic polymerization.

18. Use of a copper complex as defined in any one of claims 1 and 5-8, for effecting visible to middle-to-near UV free radical photopolymerization and/or cationic photopolymerization of a composition comprising a light-occulting amount of opaque fillers.

19. Use of the tri-association of:
a copper complex as defined in any one of claims 1 and 5-8,
an iodonium salt, and
an aromatic amine;
for effecting visible to middle-to-near UV free radical photopolymerization and/or cationic photopolymerization of a composition comprising a light-occulting amount of opaque fillers.

20. Use of a copper complex as defined in any one of claims 1 and 5-8, for preparing polymer/opaque filler composite materials wherein the polymer is an interpenetrated network of at least two polymers whose polymerization is effected by free radical photopolymerization and cationic photopolymerization, respectively, under visible to middle-to-near UV irradiation.

21. Use of the tri-association of :
a copper complex as defined in any one of claims 1 and 5-8,
an iodonium salt, and
an aromatic amine;
for preparing polymer/opaque filler composite materials wherein the polymer is an interpenetrated network of at least two polymers whose polymerization is effected by free radical photopolymerization and cationic photopolymerization, respectively, under visible to middle-to-near UV irradiation.

22. Use of a copper complex as defined in any one of claims 1 and 5-8, for dark curing polymerizable compositions containing light-occulting amounts of opaque fillers, under visible to middle-to-near UV irradiation.

23. Use of the tri-association of :
a copper complex as defined in any one of claims 1 and 5-8,
an iodonium salt, and
an aromatic amine;
for dark curing polymerizable compositions containing light-occulting amounts of opaque fillers, under visible to middle-to-near UV irradiation.
